# EUROPÄISCHE PATENTSCHRIFT

(11) **EP 3 458 738 B1**
(45) Veröffentlichungstag und Bekanntmachung des Hinweises auf die Patenterteilung: **18.01.2023**
(21) Anmeldenummer: 17725184.0
(22) Anmeldetag: 03.05.2017
(51) Int. Cl.: F16D 55/226, F16D 65/097, F16D 55/227

(54) **SCHEIBENBREMSE FÜR EIN NUTZFAHRZEUG, BREMSBELAG UND BREMSBELAGSATZ**
DISC BRAKE FOR A COMMERCIAL VEHICLE, BRAKE PAD, AND BRAKE PAD SET
FREIN À DISQUE POUR VÉHICULE UTILITAIRE, GARNITURE DE FREIN ET JEU DE GARNITURES DE FREIN

(30) Priorität: 20.05.2016 DE 102016109360; 16.03.2017 DE 102017105641; 03.04.2017 WO PCT/EP2017/057857
(43) Veröffentlichungstag der Anmeldung: 27.03.2019
(73) Patentinhaber: KNORR-BREMSE Systeme für Nutzfahrzeuge GmbH, 80809 München (DE)
(72) Erfinder: FISCHL, Tobias, 80336 München (DE); PRITZ, Wolfgang, 80637 München (DE); PETSCHKE, Andreas, 94127 Neuburg am Inn (DE); SCHROPP, Josef, 94428 Eichendorf (DE); DAHLENBURG, Julian Cato, 91166 Georgensgmünd (DE); BARTEL, Markus, 80992 München (DE)
(86) Internationale Anmeldenummer: PCT/EP2017/060583
(87) Internationale Veröffentlichungsnummer: WO 2017/198467

(56) Entgegenhaltungen:
- DE-A1-102010 019 470
- DE-T2- 69 400 875
- FR-A1- 2 206 457
- FR-A1- 2 437 528
- US-A1- 2004 222 050
- US-B1- 8 544 614

## Beschreibung

Die Erfindung betrifft eine Scheibenbremse für ein Nutzfahrzeug nach dem Oberbegriff des Anspruchs 1.

Bei einer gattungsgemäßen, insbesondere als Schiebesattel-Bremse ausgebildeten Scheibenbremse, wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Zum Stand der Technik sei zunächst die DE 40 20 287 A1 genannt. Nach dieser Schrift ist an den beiden Bremsbelägen jeweils eine als Blattfeder ausgebildete Belagfeder vorgesehen. Die Belagträger werden nach dem Einführen in ihren Belagschacht jeweils mit der Belagfeder gehalten, die ihrerseits in montierter Stellung gemeinsam durch einen von der Oberseite auf die Blattfeder wirkenden, in Querrichtung zur Längsachse der Blattfeder sich erstreckenden Haltebügel gesichert sind. Zur Festlegung der Belagfeder sind an den Belagträger (bzw. die Belagträgerplatte) mit Hinterschneidungen versehene Laschen angeformt, die schlitzförmige Ausnehmungen in der Belagfeder durchtreten, die dabei die Hinterschneidungen hintergreifen, so dass ein Formschluss gebildet ist, durch den die Belagfeder in radialer Richtung gehalten wird und zwar so, dass ein selbsttätiges Lösen in entspannter oder teilentspannter Lage ausgeschlossen ist. Einen weiteren ähnlichen Stand der Technik zeigt die DE 14 2014 106 090 A1. Der Bremssattel weist nach diesen Schriften jeweils eine zentrale Sattelöffnung über der Bremsscheibe aufweist, durch welche die zwei Bremsbeläge in die Belagschächte einsetzbar sind, was eine einfachen Wechsel er Bremsbeläge ermöglicht. Andererseits macht es dies notwendig. Die Bremsbeläge in den Belagschächten auch einfache Weise radial - bezogen im Rahmen dieser Anmeldung auf die Bremsscheibendrehachse nach außen hin - zu sichern.

Bei Festsattelbremsen ist dieses Problem nicht in dieser Form gegeben, da dort in der Regel eine Strebe über die Bremsscheibe geführt ist, die zwar eine Belüftungsöffnung aufweisen kann, die aufgrund ihrer Dimensionierung aber nicht zum Belagwechsel gedacht und bestimmt ist. Ein Belaghaltebügel, der sich über die Sattelöffnung erstreckt, ist damit nicht erforderlich. Weitergebildet wird die eingangs beschriebene Lösung jeweils in den Patenten EP 1 963 702 B1 und der EP 2 255 101 B1. Durch diese Lösungen wird mittels einer an dem Belagträger festgelegten und vorzugsweise relativ zu dieser radial beweglichen Haube, welche von der oder von einem Teil der Belagfeder durchsetzt wird, erreicht, dass die Belagfeder insbesondere im Belastungsbereich lastübertragend stets sicher eingespannt ist.

Zum technologischen Hintergrund seien noch die EP 0 694 134 B1, die DE 10 2012 110 461 A1, die FR 2 437 528 A1, die US 8 544 614 B1 und die WO 2014/079 869 A1 genannt.

Der Erfindung liegt die Aufgabe zugrunde, eine Scheibenbremse der gattungsgemäßen Art so weiterzuentwickeln, dass mit konstruktiv einfachen Mitteln ein gutes Bremsverhalten erzielt wird. Eine weitere Aufgabe besteht darin, einen entsprechenden Bremsbelagsatz bereitzustellen.

Diese Aufgabe wird durch eine Scheibenbremse mit den Merkmalen des Anspruchs 1 gelöst. Die weitere gestellte Aufgabe wird zudem durch einen Bremsbelagsatz mit den Merkmalen des Anspruchs 22 gelöst. Sie wird zudem durch das Verfahren des Anspruchs 26 gelöst.

Anspruch 1 schafft eine Scheibenbremse für ein Nutzfahrzeug, mit einem eine Bremsscheibe übergreifenden, vorzugsweise als Schiebesattel ausgebildeten, Bremssattel, der an einem ortsfesten Bremsträger angeordnet ist und mit einer Zuspanneinrichtung zum Zuspannen der Bremse, zwei Bremsbelägen, die jeweils einen Belagträger und einen darauf befestigten Reibbelag aufweisen, von denen der eine als zuspannseitiger Bremsbelag mittels der Zuspanneinrichtung auf der einen Seite der Bremsscheibe gegen die Bremsscheibe pressbar ist und von der andere als reaktionsseitiger Bremsbelag auf der gegenüberliegenden Seite der Bremsscheibe angeordnet ist, und die jeweils in einen Belagschacht des Bremsträgers eingesetzt sind, wobei der Bremssattel eine zentrale Sattelöffnung über der Bremsscheibe aufweist, durch welche die zwei Bremsbeläge in den jeweiligen Belagschacht des Bremsträgers einsetzbar sind, und wobei ein Niederhaltebügel vorgesehen ist, der derart ausgebildet ist, dass er lediglich den reaktionsseitigen der beiden Bremsbeläge in seinem Belagschacht im Bremsträger radial sichert, wobei der Niederhaltebügel mit seinem von dem Bremsbelag abgewandten Ende an dem Bremssattel gehalten ist, und wobei der zuspannseitige Bremsbelag mittels eines Formschlusses radial im Bremsträger in seinem Belagschacht gesichert ist.

Einerseits werden derart eine vorteilhafte Scheibenbremse und ein besonders vorteilhafter reaktionsseitiger Bremsbelag und ein zugehöriger Niederhaltebügel geschaffen, der eine einfache sowie kurze und vorteilhaft auf die Funktion des Niederhaltens des radialen Bremsbelages beschränkte Bauform aufweist. Der kurze Niederhaltebügel führt durch den geringeren Materialeinsatz zu einer Gewichts- und Kostenreduzierung der Bremse. Dies wird ergänzt durch eine vorteilhafte Anordnung des zuspannseitigen Bremsbelages in seinem Belagschacht im Bremsträger, wo er durch Formschluß - insbesondere durch seitliche Vorsprünge - einfach radial gesichert ist. Die beiden Bremsbeläge sind derart einfach und gut in dem Bremsträger radial unterschiedlich gesichert, wodurch die gesamte Scheibenbremse vorteilhaft weiterentwickelt und optimiert wird. Der zuspannseitige Bremsbelag reduziert durch seine Ausgestaltung zusätzlich den Effekt des Schrägverschleißes.

Nach einer vorteilhaften Weiterbildung kann der zuspannseitige Bremsbelag eine Belagfeder aufweisen, die - vorzugsweise in einem mittleren Bereich - am zuspannseitigen Bremsbelag gehalten bzw. gesichert ist und die Enden aufweist, die auf Bremsträgerhörnern des Bremsträgers federnd aufliegen, so dass der zuspannseitige Bremsbelag vorzugsweise in seinem im Belagschacht im Bremsträger radial nach oben gezogen ist. Derart wird der zuspannseitige Bremsbelag durch die Belagfeder radial im Belagschacht nach außen (von der Bremsscheibendrehachse weg) gezogen, so dass er im Belagschacht besonders gut und sicher sitzt.

Erfindungsgemäß wird auch ein vorteilhaft einfaches Verfahren zum Montieren der Bremsbeläge in einer Scheibenbremse nach einem der darauf bezogenen Ansprüche geschaffen, bei dem
a) der reaktionsseitige Bremsbelag in seinen Belagschacht im Bremsträger radial eingesetzt wird, wobei er dann dort mit einem Niederhaltebügel, der am Bremssattel angeordnet wird, radial gesichert wird,
b) der zuspannseitige Bremsbelag zunächst radial in die Scheibenbremse eingeführt bzw. -gesetzt wird und dann durch eine axiale Bewegung in eine Position in dem ihm zugeordneten Belagschacht des Bremsträgers bewegt wird, in welcher er dort radial durch Formschluß zwischen dem zuspannseitigen Bremsbelag und dem Bremsträger gesichert ist, und
c) wobei ferner die Enden einer Belagfeder, die am zuspannseitigen Bremsbelag gehalten ist, auf Bremsträgerhörner des Bremsträgers aufgelegt werden, so dass sie auf diesen Bremsträgerhörnern des Bremsträgers federnd aufliegen.

Insbesondere die Montage des zuspannseitigen Bremsbelages ist derart sehr einfach. Jeder der beiden Bremsbeläge wird einfach und sicher in seinem Belagschacht montiert.

Es ist vorteilhaft, dass der Niederhaltebügel lediglich den einen der beiden Bremsbeläge ganz oder teilweise axial parallel zur Bremsscheibe übergreift, um ihn zu sichern. Derart wird dieser Belag quasi radial "von oben" im Belagschacht des Bremsträgers oder des Bremssattels gehalten und gegen (zu große radiale) Bewegungen gesichert. Dabei ist der radial gesicherte bzw. niedergehaltene reaktionsseitige Bremsbelag in einen Belagschacht des Bremsträgers einsetzbar. Es ist eine besonders bevorzugte Ausgestaltung, dass beide Bremsbeläge in Belagschächten des Bremsträgers angeordnet sind und durch die Öffnung im Bremssattel - die für die Bremsbeläge eine Montageöffnung ist - in diese einsetzbar sind, und zwar im Wesentlichen radial von oben und ggf. ergänzend durch eine axiale kleinere Bewegung. Ein Bremsträger mit Belagschächten auf beiden Seiten der Bremsscheibe ist sehr stabil und vorteilhaft. Der Belagschacht stützt den Belag in Umfangsrichtung und radial nach unten zur Bremsscheibe hin. Nach oben hin sichert dann den einen Bremsbelag der axial "kurze" Niederhaltebügel gegen Ausfallen und zu große radiale Bewegungen, ggf. unterstützt von einer dazwischen angeordneten Feder. Der andere Bremsbelag wird auf andere vorteilhafte Weise - nicht von dem gleichen Niederhaltebügel - radial gesichert.

Ein Sichern des reaktionsseitigen Bremsbelages mit dem "kurzen" Niederhaltebügel hat den Vorteil, dass es leicht realisierbar ist, insbesondere, wenn dieser im Bremssattel axial unbeweglich gehalten ist und sich bei Bremsungen relativ zum Bremssattel insbesondere im Bereich seiner Rückenplatte bzw. Belagträgerplatte nicht verschiebt.

Dabei kann nach Varianten der Niederhaltebügel an dem Bremssattel lösbar oder unlösbar befestigt sein oder einstückig mit diesem ausgestaltet sein.

Vorteilhaft ist eine optionale Ausgestaltung des Niederhaltebügels mit diesem Bremsbelag als Baueinheit, die als Ganzes beim Belagwechsel ausgetaucht wird. Dies ist einfach und führt zu einer einfachen und sicheren Erneuerung aller zu wechselnden Elemente an der Baueinheit "reaktionsseitiger Belag" (Bremsbelag, Belagfeder, wenn vorhanden: Haube und Niederhaltebügel).

Der Niederhaltebügel kann auf dem Belagträger aufliegen oder ihn hintergreifen und derart mit diesem zusammenwirken. Er kann auch formschlüssig mit ihm zusammenwirken, so beispielsweise z.B. mit einem Vorsprung formschlüssig in ihn im Bereich einer entsprechenden Vertiefung eingreifen (oder umgekehrt).

Als eine mögliche - besonders vorteilhafte - Variante kann der Niederhaltebügel unverlierbar mit dem Belag verbunden werden, insbesondere unverlierbar mit dem Belagträger verbunden werden. Dies hat den Vorteil, das diese Baugruppe komplett verbaut wird und somit ein Falschverbau ausgeschlossen wird. Falschverbau bedeutet in diesem Fall, das die Rückenplatte zur Bremsscheibe hin verbaut wäre.

Dabei sind unterschiedliche Verbindungsarten zwischen Niederhaltebügel und Bremsbelag möglich. Die Verbindung kann über eine Haube erfolgen, wobei hier eine oder mehrere Laschen vorgesehen werden, welche den Niederhaltebügel ganz oder teilweise umgreifen und anschließend über Schweißung, Nietung, Vertaumeln oder ähnliche Verfahren so montiert wird, das eine Demontage ohne Zerstörung eines Bauteils nicht mehr möglich ist. Die Umgreifung kann nach hinten, wie in den Skizzen dargestellt oder nach oben erfolgen.

Die Verbindung kann auch über einen Bundbolzen erfolgen, der z.B. durch den Niederhaltebügel durchgereift und auf die Haube aufgeschweißt oder vernietet (stoff- kraft- oder formschlüssig) wird.

Die Verbindung kann auch über einen Bolzen erfolgen, der in der Belagrückenplatte fest oder verschiebbar befestigt ist.

Der Niederhaltebügel kann auch die Belagrückenplatte ganz oder teilweise durchgreifen. Anschließend wird bei einer solchen Variante auf einem Niederhaltebügel eine Feder dauerhaft befestigt, so das der Niederhaltebügel - wie oben bereits erwähnt - unverlierbar mit dem Belag verbunden ist.

In einem weiteren Konzept kann die Belaghaltefeder vom Belag weg verlagert werden. In einem vom Belag entfernten Bereich treten in der Regel geringere Temperaturen als direkt am Belag auf, was sich positv auf die Lebensdauer als auch auf die größere Auswahlmöglichkeit von Federmaterialien auswirkt. Da die Federn gegen Korrosion mit einer Beschichtung geschützt sind, bei denen sich die Temperatur ebenfalls auf die Lebensdauer auswirkt, könnte auch hier eine Verbesserung erfolgen. Der Niederhaltebügel wird hierbei mit dem Belag fest oder mit Spiel zum Toleranzausgleich verbunden. Die Feder drückt in diesem Fall den Niederhaltebügel nach unten. Über den Niederhaltebügel wird der Belag nach unten auf den Bremsträger gedrückt. Diese Federung kann über unterschiedliche Federausführungen erfolgen z.B.: Blattfeder, Spiralfeder, Schenkelfeder, ...

Eine Arretierung bzw. ein Halten des Niederhaltebügels am Belag und/oder am Bremssattel kann einfach mittels eines oder mehreren Befestigungsmitteln, insbesondere Bolzen(s) oder Klammer(n) oder einer oer mehreren Schraube(n) erfolgen.

So ist es denkbar, und vorteilhaft einfach, wenn der Niederhaltebügel an einem Teil des reaktionsseitigen Bremsbelags unlösbar festgelegt ist. Er kann beispielsweise auch an dem Belagträger stoffschlüssig befestigt sein, beispielsweise schweißend.

Die Erfindung schafft auch einen vorteilhaften Bremsbelag für eine Scheibenbremse nach einem der darauf bezogenen Ansprüche, der einen Belagträger und einen darauf befestigten Reibbelag aufweist, welcher Bremsbelag zum Zusammenwirken mit dem Niederhaltebügel ausgebildet ist. Der Niederhaltebügel und der Bremsbelag können - müssen aber nicht zwingend - dabei eine Baueinheit bilden.

Dabei ist der Niederhaltebügel derart ausgebildet, dass er lediglich den reaktionsseitigen Bremsbelag in seinem Belagschacht an einer Scheibenbremse radial sichert.

Dabei ist es besonders vorteilhaft, dass der Niederhaltebügel an dem reaktionsseitigen Bremsbelag festgelegt ist, da dieser im Bremssattel axial festgelegt ist und nicht mit zunehmendem Verschleiß in diesem verschoben wird. Insofern kann die Erfindung hier einfach realisiert werden. Sie ist aber nicht auf diese Variante zu beschränken.

Nach einer weiteren vorteilhaften Variante, ist eine Kabelbrücke vorgesehen, an der wenigstens ein Signalkabel angeordnet und gehalten ist, welche Kabelbrücke die Öffnung des Bremssattels überbrückt und welche in wenigstens zwei Bereichen direkt oder indirekt an dem Bremssattel befestigt ist. Derart kann ein Signalkabel trotz des "kurzen" Niederhaltebügels gut über die Öffnung des Bremssattels gelegt werden.

Geschaffen wird auch ein Bremsbelagsatz mit einem reaktionsseitigen Bremsbelag nach einem der Ansprüche 22 bis 27 mit einem reaktionsseitigen Bremsbelag und mit einem zuspannseitigen Bremsbelag, wobei der zuspannseitige Bremsbelag mittels wenigstens eines Formschlusselementes am Belagträger radial im Bremsträger gesichert ist und eine Belagfeder aufweist, die am zuspannseitigen Bremsbelag gesichert ist und wobei die Belagfeder Enden aufweist, die dazu ausgelegt sind, auf Bremsträgerhörnern eines zugeordneten Bremsträgers federnd aufzuliegen und dass der reaktionsseitige Bremsbelag zum Zusammenwirken mit einem Niederhaltebügel ausgebildet ist, welcher Niederhaltebügel derart ausgebildet ist, dass er lediglich einen von zwei der beiden Bremsbeläge in seinem Belagschacht an einer Scheibenbremse radial sichert.

Derart benötigt der zuspannseitige Bremsbelag auf der Zuspannseite keinen Niederhaltebügel zur radialen Sicherung. Darüber hinaus reduziert dieser Belag den Effekt des Schrägverschleißes. Nach einer Erkenntnis der Erfindung muss der reaktionsseitige Beklag diese Bauform nicht unbedingt auch aufweisen. Er kann vielmehr auch ohne Vorsprünge ausgestaltet werden. Dann ist der "kurze" Niederhaltebügel besonders vorteilhaft. Insgesamt wird derart eine sehr kostengünstige Scheibenbremse mit zwei auf ihre Aufgaben optimal angepassten Bremsbelägen als Belagsatz geschaffen.

Geschaffen wird kurzgefasst auch vorteilhaft eine Scheibenbremse für ein Nutzfahrzeug, mit einem eine Bremsscheibe übergreifenden, vorzugsweise als Schiebesattel ausgebildeten Bremssattel, der an einem ortsfesten Bremsträger befestigt ist und eine zentrale Sattelöffnung über der Bremsscheibe aufweist, mit einer Zuspanneinrichtung zum Zuspannen der Bremse, und mit zwei durch die Sattelöffnung einsetzbaren Bremsbelägen, die jeweils einen Belagträger und einen darauf befestigten Reibbelag aufweisen, von denen der eine als zuspannseitiger Bremsbelag mittels der Zuspanneinrichtung auf der einen Seite der Bremsscheibe gegen die Bremsscheibe pressbar ist und von der andere als reaktionsseitiger Bremsbelag auf der gegenüberliegenden Seite der Bremsscheibe angeordnet ist, und wobei ein Niederhaltebügel vorgesehen ist, der derart ausgebildet ist, dass er lediglich den einen der beiden Bremsbeläge im Belagschacht radial sichert bzw. radial relativ zur Bremsscheibendrehachse niederhält.

Die vorliegende Erfindung betrifft in einer Weiterbildung der vorstehend erläuterten Varianten sowie in einer auch selbstständig für sich als erfinderisch anzusehenden Ausgestaltung zudem eine Scheibenbremse mit einem vorteilhaften Bremsträger (Anspruch 14). Gattungsgemäße Bremsträger für pneumatisch oder elektromotorisch betätigbare Scheibenbremsen von Nutzfahrzeugen weisen im Wesentlichen einen Anbindungsbereich auf, der der Festlegung an einer Fahrzeugachse, beispielsweise durch Verschrauben an einem Achsflansch einer solchen Fahrzeugachse, sowie einen Belagschacht zur Aufnahme und Abstützung wenigstens eines Bremsbelags. Der Belagschacht wird dabei durch eine Brücke mit Auflageflächen zur radialen Abstützung des Bremsbelags und aus dieser vorstehenden Trägerhörnern gebildet, wobei die Trägerhörner den jeweiligen Bremsbelag seitlich führen und bei einem Bremsvorgang die von einer Bremsscheibe auf den Bremsbelag übertragenen Bremskräfte aufnehmen. Bekannt sind auch die Bremsscheibe übergreifende Bremsträger mit zwei Belagschächten zur Aufnahme eines zuspannseitigen Bremsbelags und eines reaktionsseitigen Bremsbelags. Als zuspannseitiger Bremsbelag ist dabei hier der Bremsbelag definiert, der unmittelbar von einer Zuspanneinheit der Scheibenbremse bewegt bzw. angetrieben wird. Als reaktionsseitiger Bremsbelag ist hier weiter der zweite Bremsbelag definiert, der nach dem Andrücken des zuspannseitigen Bremsbelags an die Bremsscheibe durch eine Bewegung des Bremssattels an die reaktionseitige Reibfläche der Bremsscheibe angedrückt wird.

Zur Montage eines Bremsbelags in einem solchen Belagschacht eines Bremsträgers wird der Bremsbelag radial zur Drehachse der Bremsscheibe, entlang der Innenflächen der Trägerhörner in den Belagschacht des Bremsträgers eingeführt. Sind die Innenflächen der Trägerhörner eben ausgeführt und die Geometrie des Belagschachts im Wesentlichen rechteckig, ist dadurch ein sehr einfaches Einführen des Bremsbelags von oben durch eine Belagschachtöffnung eines Bremssattels der Scheibenbremse direkt in den Belagschacht ermöglicht.

Eine solche Anordnung bedingt jedoch ein zusätzliches Halte- bzw. Sicherungssystem des Belages bzw. der Bremsbeläge, insbesondere zur radialen Fixierung der Bremsbeläge, um sie gegen ein Herausfallen zu sichern, beispielsweise in Gestalt eines die Belagschachtöffnung des Bremssattels in Richtung der Drehachse der Bremsscheibe übergreifenden Belaghaltebügels.

Im Falle eines Bremsträgers, bei dem die Trägerhörner derart gestaltet sind, dass einer oder beide der Bremsbeläge an einem oder beiden der jeweiligen Trägerhörner radial formschlüssig fixiert sind, ist es erforderlich, nach einer ersten radialen Bewegung durch die Öffnung des Bremssattels den jeweiligen der Bremsbeläge zunächst axial parallel zur Fahrzeugachse im Belagschacht zu bewegen, bis jeweilige Vorsprünge an den Seitenwänden der Bremsbeläge und entsprechende Ausnehmungen an den Innenseiten der Trägerhörner des Bremsträgers in Überdeckung kommen, so dass der Bremsbelag eine Einschiebeposition erreicht, in der der Bremsbelag anschließend in Richtung der Drehachse der Bremsscheibe in den Belagschacht eingeschoben werden kann. Ein solcher Bremsträger ist beispielsweise aus der DE 10 2015 114 351 A1 bekannt.

Wünschenswert bei der Montage insbesondere des durch die Scheibenbremse verdeckten zuspannseitigen Bremsbelags ist es, die Positionierung beim Einbauvorgang möglichst einfach und schnell durchführen zu können.

Es ist insofern eine Aufgabe einer Weiterentwicklung der vorstehend erörterten Varianten sowie auch einer eigenständigen Erfindung, eine Scheibenbremse mit einem Bremsträger bereitzustellen, an dem der Einbau von Bremsbelägen weiter vereinfacht wird.

Diese Aufgabe wird durch eine Scheibenbremse mit einem Bremsträger mit den Merkmalen des Anspruchs 14gelöst.

Der Bremsträger für eine pneumatisch oder elektromotorisch betätigbare Scheibenbremse eines Nutzfahrzeugs weist dann einen Anbindungsbereich zur Festlegung an einer Fahrzeugachse auf, wenigstens einen Belagschacht zur Aufnahme und Abstützung wenigstens eines Bremsbelages.

Der Belagschacht wird durch ein einlaufseitiges Trägerhorn, ein auslaufseitiges Trägerhorn und eine das einlaufseitige Trägerhorn und das auslaufseitige Trägerhorn verbindende Brücke gebildet. Dabei bilden an die Trägerhörner angrenzende Bereiche der Brücke Auflageflächen zur radialen Abstützung des Bremsbelags.

An einer Seitenfläche der Trägerhörner sind jeweilige Führungskonturen zur Führung des Bremsbelags in eine Einschiebeposition seitlich des Belagschachts angeordnet, in der der Bremsbelag axial zur Fahrzeugsachse in den Belagschacht zwischen die Trägerhörner einschiebbar ist.

Mit einem derartigen Bremsträger ist eine erleichterte Ausrichtung eines in den Belagschacht des Bremsträgers einzuführenden Bremsbelags ermöglicht, da durch die Führungskontur eine exakt mittige Positionierung des Bremsbelags erzwungen wird.

Wird der Bremsbelag beim Einschieben in radialer Richtung zunächst seitlich verschoben angesetzt, stößt eine Seitenkante einer Belagträgerplatte des Bremsbelags an die Führungskontur an und wird entlang der Führungskontur in seine korrekte Einschiebeposition geführt.

Vorteilhafte Ausführungsvarianten der Erfindung sind Gegenstand der Unteransprüche.

Gemäß einer vorteilhaften Ausführungsvariante des erfindungsgemäßen Bremsträgers sind die Auflageflächen zur radialen Abstützung des wenigstens eines Bremsbelags seitlich um einen Montagebereich zur Begrenzung der Schiebebewegung des Bremsbelags in die Einschiebeposition seitlich des Belagschachts vergrößert. Dies ermöglicht in einfacher Weise das Einschieben des Bremsbelags in die Einschiebeposition, bei der der Bremsbelag parallel zur Drehachse der Bremsscheibe in dem Belagschacht vorgeschoben werden kann.

Die Führungskonturen sind gemäß einer bevorzugten Ausführungsvariante der Erfindung als Materialverdickung der Trägerhörner an den Seitenflächen der Trägerhörner angeformt. Die Führungskonturen sind so in einfacher Weise beim Gießprozess des Bremsträgers an den Trägerhörnern anformbar.

Die Führungskonturen sind dabei bevorzugt so geformt, dass sie zur Brücke hin aufeinander zulaufend geformt sind.

Besonders bevorzugt weisen die die Führungskonturen jeweils wenigstens einen geradlinigen Führungsbereich auf, der ermöglicht, dass der jeweilige Bremsbelag bei anfänglich seitlich verschobener Positionierung in die exakte mittige Position geführt werden kann.

Im Falle eines Bremsträgers, bei dem an jeweiligen Innenseiten der Trägerhörner Vorsprünge angeformt sind, die der radialen Sicherung des Bremsbelags mit entsprechend geformter Belagträgerplatte mit seitlichen Ausnehmungen dienen, sind bevorzugt unterhalb der Vorsprünge jeweils eine Aufnahme zur Aufnahme eines jeweiligen Vorsprungs der Belagträgerplatte angeformt, wobei die Führungskonturen jeweils an einem Seitenrand der jeweiligen Aufnahme enden.

Dadurch kann der Bremsbelag entlang einer der Führungskonturen stets in die korrekte Einschiebeposition geführt werden.

Die erfindungsgemäße Scheibenbremse weist einen eine Bremsscheibe übergreifenden, verschiebbaren Bremssattel auf, beidseitig der Bremsscheibe in einem Belagschacht eines Bremsträgers angeordnete Bremsbeläge mit einer Belagträgerplatte und einem an dieser befestigten Reibbelag.

Die Bremsbeläge sind einlaufseitig und auslaufseitig radial zur Drehachse der Bremsscheibe formschlüssig an Trägerhörnern des Bremsträgers gehalten, wobei der Bremsträger wie oben beschrieben ausgebildet ist.

Bevorzugt weisen ausschließlich die zuspannseitigen Trägerhörner die Führungskonturen zur Führung des Bremsbelags in eine Einschiebeposition seitlich des Belagschachts auf.

Insbesondere bei der Montage der zuspannseitigen Bremsbeläge ist im Regelfall die exakte Ausrichtung durch Sichtbehinderung durch die Bremsscheibe erschwert, so dass hier die vorgeschlagenen Führungskonturen die Montage deutlich erleichtern.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: in a) eine perspektivische Ansicht einer ersten erfindungsgemäßen Scheibenbremse und in b) einen Ansicht eines Bremsträgers der Scheibenbremse aus a);
- Fig. 2: die Ansicht aus Fig. 1a mit teilweise ausgeblendetem Bremssattel;
- Fig. 3: eine perspektivische Ansicht eines zuspannseitigen Bremsbelages der Scheibenbremse aus Fig. 1 (und der Scheibenbremse aus Fig. 9);
- Fig. 4: einen ersten reaktionsseitigen Bremsbelag mit einer Belagfeder, einer Haube und einem daran angeordneten Niederhaltebügel;
- Fig. 5: eine teilgeschnittene Ansicht der Anordnung aus Fig. 4;
- Fig. 6: den Bremsbelag der Anordnung aus Fig. 4 und 5;
- Fig. 7: den Niederhaltebügel der Anordnung aus Fig. 4;
- Fig. 8: eine Haube der Anordnung aus Fig. 4;
- Fig. 9: eine perspektivische Ansicht einer zweiten erfindungsgemäßen Scheibenbremse;
- Fig. 10: die Ansicht aus Fig. 9 mit teilweise ausgeblendetem Bremssattel;
- Fig. 11: eine Variante eines reaktionsseitigen Bremsbelags mit einem daran angeordneten Niederhaltebügel;
- Fig. 12: eine teilgeschnittene Ansicht der Anordnung aus Fig. 11;
- Fig. 13: den Bremsbelag der Anordnung aus Fig. 11 und 12;
- Fig. 14: den Niederhaltebügel der Anordnung aus Fig. 11;
- Fig. 15: eine Haube des Bremsbelags aus Fig. 13 und 14;
- Fig. 16: eine weitere Variante eines reaktionsseitigen Bremsbelags mit einem daran angeordneten Niederhaltebügel; und
- Fig. 17: in a) eine perspektivische Ansicht eines Teils einer dritten weiteren erfindungsgemäßen Scheibenbremse, in b) einen Schnitt durch einen Teilbereich der Anordnung aus a), in c) eine teilgeschnittene Ansicht eines Teilbereichs der Anordnung aus a), und in d) einen Niederhaltebügel der Anordnung aus a) in separater perspektivischer Darstellung;
- Fig. 18: eine perspektivische Ansicht eines Teils einer vierten weiteren erfindungsgemäßen Scheibenbremse;
- Fig. 19: in a) eine perspektivische Ansicht eines Teils einer fünften weiteren erfindungsgemäßen Scheibenbremse und in b) einen Niederhaltebügel für die Anordnung aus a) in jeweils separater perspektivischer Darstellung;
- Fig. 20: in a) eine perspektivische Ansicht eines Teils einer weiteren erfindungsgemäßen Scheibenbremse und in b) einen Niederhaltebügel für die Anordnung aus Fig. 19 oder 20a) in jeweils separater perspektivischer Darstellung:
- Fig. 21: in a) eine perspektivische Ansicht eines Teils einer sechsten weiteren erfindungsgemäßen Scheibenbremse mit einer Kabelbrücke und in b) die Kabelbrücke der Scheibenbremse aus a);
- Fig. 22: in a) eine perspektivische Ansicht eines Teils einer siebten weiteren erfindungsgemäßen Scheibenbremse mit einer anders als in Fig. 21 gestalteten Kabelbrücke, in b) eine Ausschnittsvergrößerung aus a), in c) die Kabelbrücke der Scheibenbremse aus a) und in d) einen Belaghaltebügel der Scheibenbremse aus a);
- Fig. 23: eine perspektivische Darstellung einer Ausführungsvariante eines Bremsträgers und eines Bremsbelags vor der Montage,
- Fig. 24: eine perspektivische Detailansicht des Bremsträgers aus Fig. 23 mit teilweise radial eingeschobenem Bremsbelag,
- Fig. 25: eine perspektivische Detailansicht des Bremsbelags und des Bremsträgers aus Fig. 1 mit radial vollständig eingeschobenem Bremsbelag vor der Axialverschiebung in den Belagschacht,
- Fig. 26: eine der Fig. 25 entsprechende Ansicht bei in den Belagschacht eingeschobenem Bremsbelag,

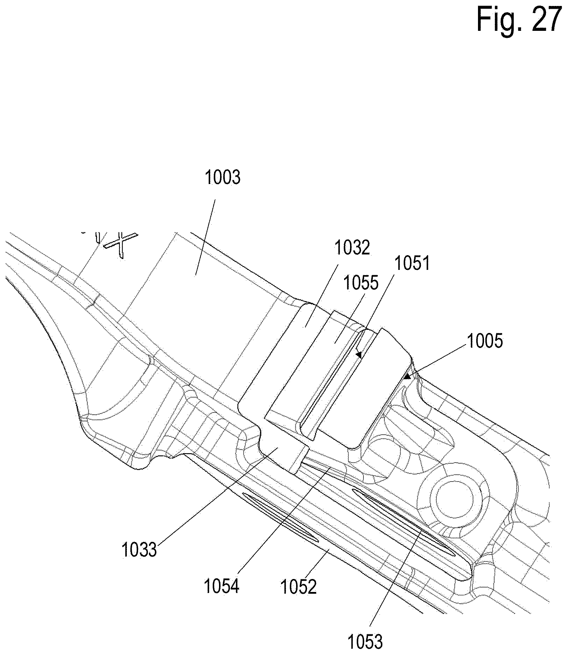

- Fig. 27: eine Draufsicht auf den Bremsträger aus Fig. 23,

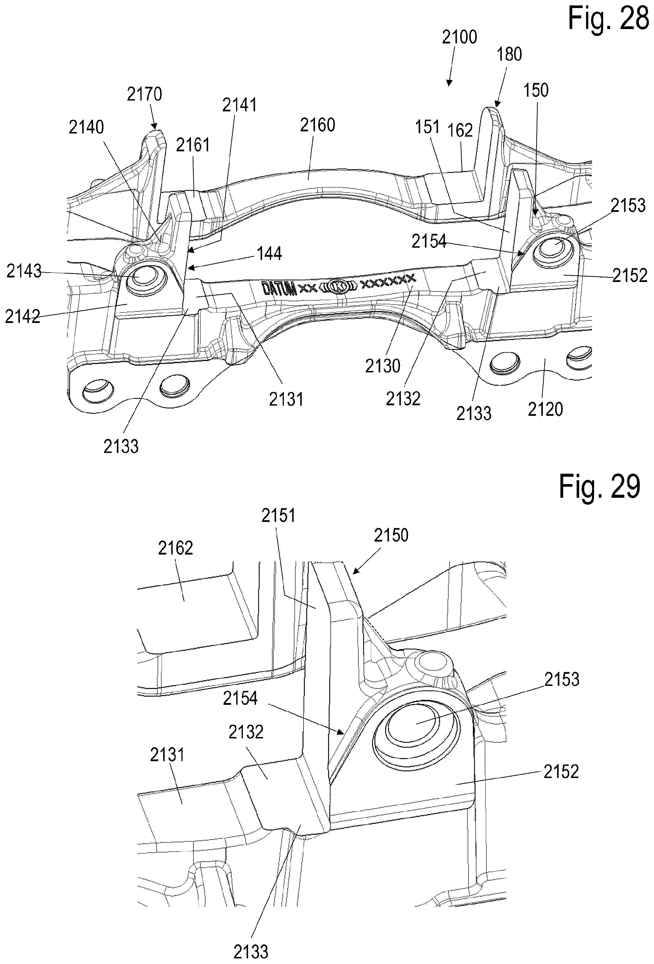

- Fig. 28: eine perspektivische Ansicht einer alternativen Ausführungsvariante eines Bremsträgers und
- Fig. 29: eine perspektivische Detailansicht des Bremsträgers aus Fig. 28.

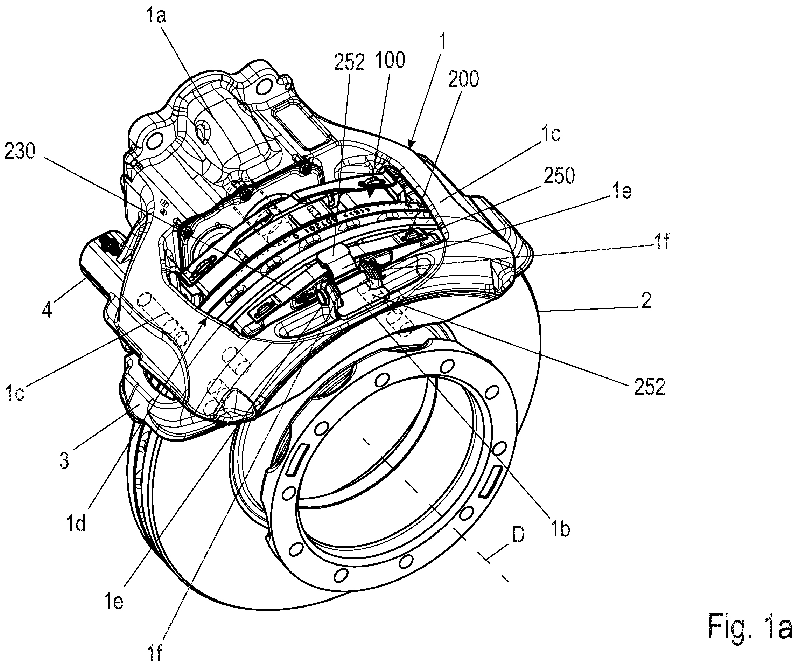

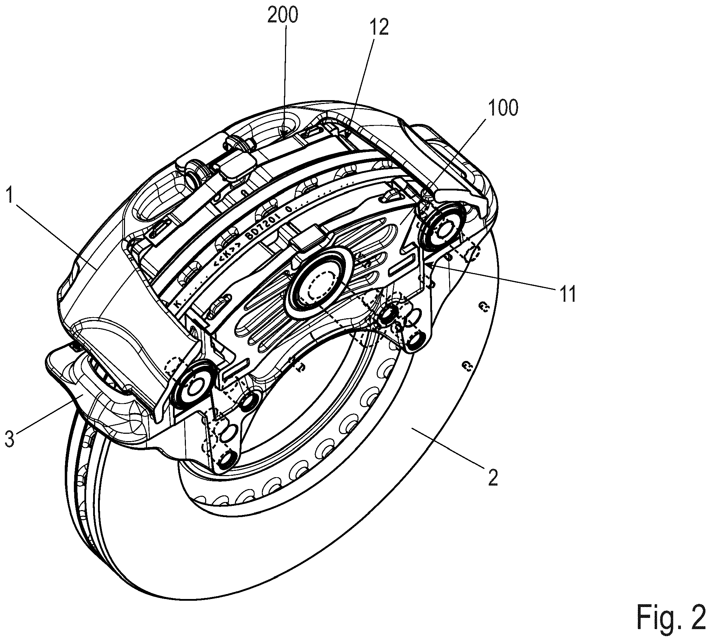

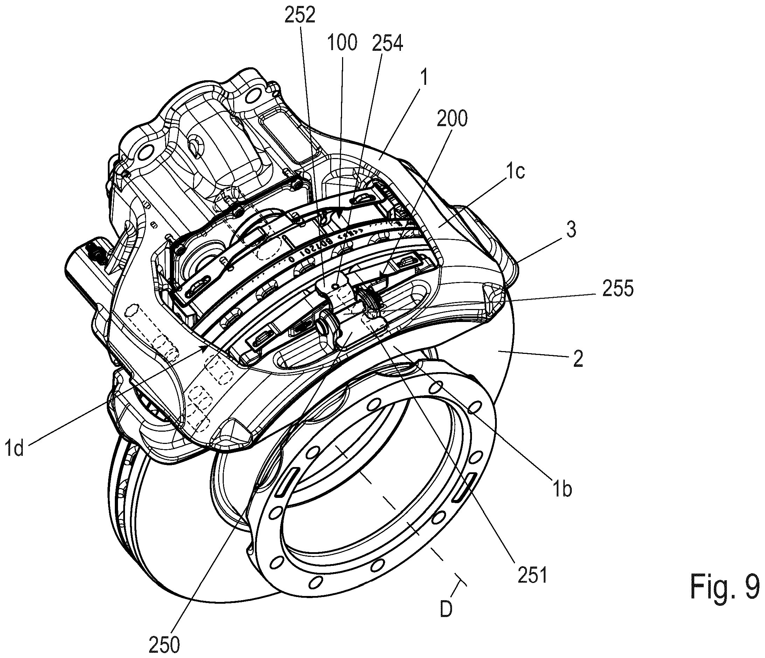

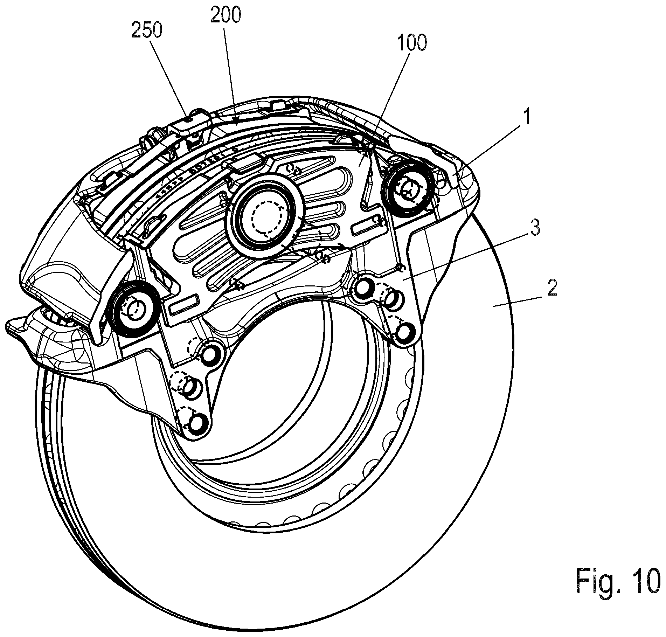

In der **Fig. 1a** und **2** sowie der **Fig. 9** und **10** ist jeweils eine Scheibenbremse für ein Nutzfahrzeug abgebildet. Die Scheibenbremse weist einen eine Bremsscheibe 2 übergreifenden Bremssattel 1 auf. Nicht dargestellt ist ein zugehöriger elektrischer oder pneumatischer Aktuator (z.B. ein Bremszylinder). Die Bremsscheibe 2 weist eine Bremsscheibendrehachse D auf. Der Bremssattel 1 ist an einem Bremsträger 3 angeordnet. Hier ist der Bremssattel 1 in bevorzugter Ausgestaltung bezogen auf die Bremsscheibe 2 axial in Richtung der Bremsscheibendrehachse D (auf welche sich hier Begriffe wie "axial" und "radial" beziehen) verschiebbar an dem Bremsträger 3 angeordnet. Dazu ist der Bremssattel 1 auf hier nicht im Detail erkennbaren Führungsholmen 4 gelagert, die mit dem ortsfest am Fahrzeug gehaltenen Bremsträger 3 verbunden sind.

Der Bremssattel 1 umfasst einen Zuspannabschnitt 1a, einen Sattelrücken 1b und zwei Zugstreben 1c. Der Zuspannabschnitt 1a nimmt eine nicht gezeigte Zuspanneinrichtung der Scheibenbremse 1 auf.

Der Zuspannabschnitt 1a verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 1b angeordnet. Der Sattelrücken 1b ist mit dem Zuspannabschnitt 1a an jeweils einem Ende mit jeweils einer Zugstrebe 1c, verbunden. Die Zugstreben 1c verlaufen dabei im Wesentlichen rechtwinklig zum Zuspannabschnitt 1a und zum Sattelrücken 1b.

Der Zuspannabschnitt 1a, der Sattelrücken 1b und die Zugstreben 1c legen in dieser Anordnung eine zentrale Öffnung 1d zwischen sich fest, welche die Bremsscheibe 2 überspannt. Die Öffnung 1d weist eine gedachte Längsmittellinie auf, welche in der Ebene der Bremsscheibe 2 liegt und die gedachten Mitten der Zugstreben 1c verbindet. Außerdem weist die Öffnung 1d eine weitere gedachte Quermittellinie auf, welche eine gedachte Mitte des Zuspannabschnitts 1a mit einer gedachten Mitte des Sattelrückens 1b verbindet.

Beidseits der Bremsscheibe 2 ist jeweils ein Bremsbelag 100, 200 vorgesehen (in Fig. 9 nicht dargestellt). Der eine Bremsbelag 100 - nachfolgend auch zuspannseitiger Bremsbelag 100 genannt - ist auf der Seite einer Zuspanneinrichtung angeordnet. Der weitere Bremsbelag 200 - nachfolgend auch reaktionsseitiger Bremsbelag 200 genannt - ist auf der der Zuspannseite gegenüberliegenden Seite der Bremsscheibe 2 angeordnet.

Die zentrale Sattelöffnung 1d über der Bremsscheibe ist dazu ausgelegt bzw. so dimensioniert, dass die zwei Bremsbeläge durch die Sattelöffnung in den Bremsträger einsetzbar sind, was einen einfachen Belagwechsel ermöglicht.

Eine Bremsung erfolgt mittels der im Zuspannabschnitt 1a des Bremssattels 1 dort in einem Aufnahmeraum angeordneten Zuspanneinrichtung mit einem Bremshebel, der in einem Dom bzw. dem Zuspannabschnitt 1a des Bremssattels 1 positioniert ist. Die Zuspanneinrichtung wird von einem nicht dargestellten Aktuator betätigt. Sie ist vorzugsweise pneumatisch betätigt oder elektromechanisch. Dazu wird sie vorzugsweise mit einem Bremszylinder versehen, der an dem Bremssattel der Scheibenbremse angeordnet werden kann (hier nicht dargestellt).

Die beiden Bremsbeläge 100, 200 sind während Bremsungen beidseitig an die Bremsscheibe 2 anpressbar. Der zuspannseitige Bremsbelag 100 kontaktiert bei einer Ausgestaltung als Schiebesattelbremse bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 200, bis dieser gleichfalls an der Bremsscheibe 2 reibend zur Anlage kommt.

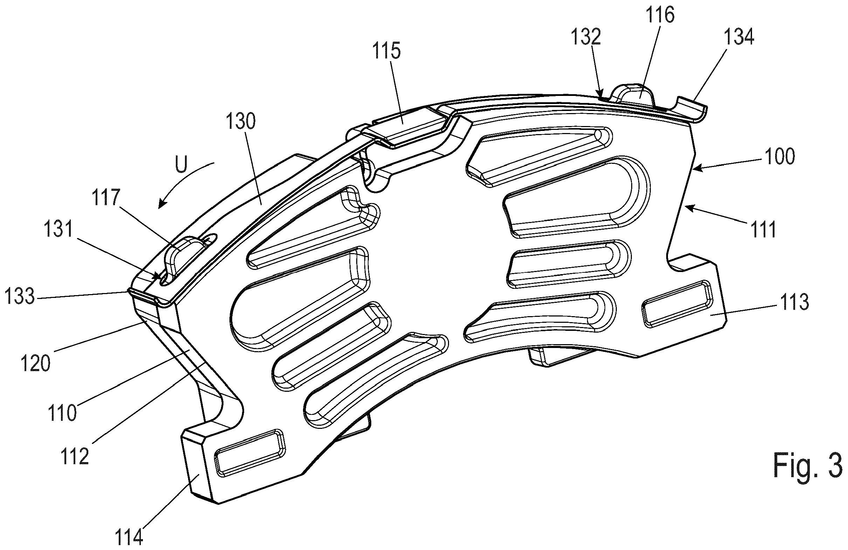

Jeder der Bremsbeläge 100, 200 - siehe **Fig. 3****,** **4** **und** **11** und 16 - weist jeweils einen Belagträger 110, 210 und einen auf der der Bremsscheibe 2 zugewandten Seite daran befestigten Reibbelag 120, 220 auf, der in Funktion, also bei einer Bremsung, gegen die Bremsscheibe 2 gepresst ist.

Die Bremsbeläge 100, 200 sind durch die zentrale Öffnung 1d für einen Wechsel und zur Wartung erreichbar. Sie können "von oben" radial durch diese zentrale Öffnung 1d in zugehörige Belagschächte eingesetzt und wieder daraus entnommen werden. Die Begriffe "oben" und "unten" werden nachfolgend in diesem Sinne verwendet.

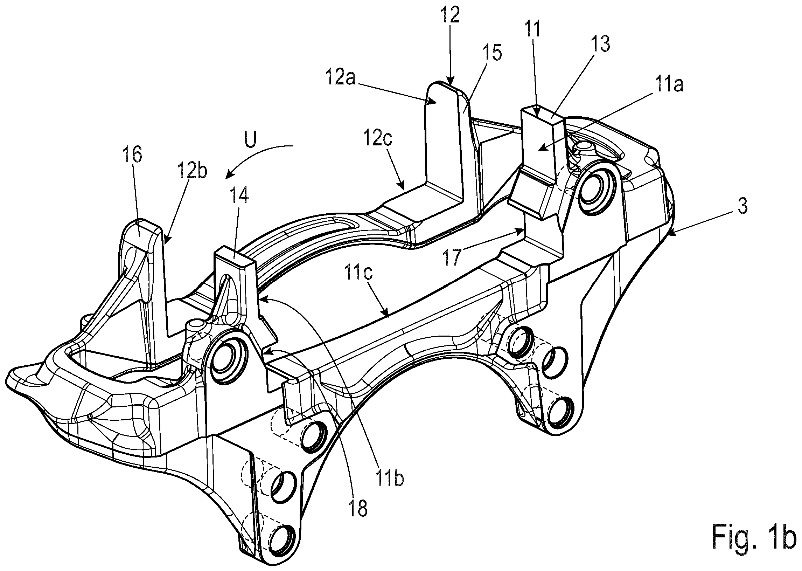

Ein zuspannseitiger Belagschacht 11 für den zuspannseitigen Bremsbelag 100 ist im Bremsträger 3 auf der Seite der Zuspanneinrichtung bzw. in einem zuspannseitigen Abschnitt des Bremsträgers ausgebildet. Dies ist in **Fig. 1b** zu erkennen.

Es ist vorgesehen, dass, dass der Bremsträger 3 rahmenartig einen oberen Randbereich der Bremsscheibe 2 umgreift und einen zuspannseitigen und einen reaktionsseigen Abschnitt aufweist. Dann wird ein zweiter Belagschacht 12 für den reaktionsseitigen Bremsbelag vorzugsweise auch im Bremsträger 3 ausgebildet (auf der Reaktionsseite, siehe **Fig. 1a** und **b).** Der reaktionsseitige Belagschacht 12 für den reaktionsseitigen Bremsbelag 100 kann alternativ aber auch im Bremssattel 1 ausgebildet sein (wenn der Bremsträger nur einen zuspannseitigen Abschnitt aufweist und keinen reaktionsseitigen Abschnitt; hier nicht dargestellt).

Die Belagschächte 11, 12 sind (siehe **Fig. 1a** und **1b**) jeweils seitlich (bzw. in Drehrichtung U und gegen die Drehrichtung U) durch Abstützflächen 11a, 11b; 12a, 12b an Bremsträgerhörnern 13, 14 sowie 15, 16 begrenzt und weisen jeweils einen Belagschachtgrund 11c, 12c auf, der zwischen den Bremsträgerhörnern 13 und 14 bzw. 15 und 16 ausgebildet ist.

Der zuspannseitige Bremsbelag 100 und der reaktionsseitige Bremsbelag 200 sind hier verschieden ausgebildet. Dabei kann der zuspannseitige Bremsbelag 100 wiederum auf verschiedenste Weise ausgebildet werden. Die in Fig. 2 und 3 gewählte Darstellung ist insofern zwar besonders vorteilhaft, aber nicht zwingend.

Der zuspannseitige Bremsbelag 100 der **Fig. 2** und **3** (für die Bremse der **Fig. 1** und der **Fig. 9** geeignet) weist den Belagträger 110 und das daran einseitig angeordnete Belagmaterial 120 auf, das im eingebauten Zustand zur Bremsscheibe 2 gerichtet ist. Der Belagträger 110 weist wiederum zwei Seitenkanten 111, 112 auf, die parallel zu den zugehörigen Abstützflächen der Bremsträgerhörnern 13, 14 liegen. Bezogen auf die bevorzugte Drehrichtung U (entsprechend einer Vorwärtsfahrt) ist die eine Seitenkante 111 auslaufseitig ausgebildet und dient derart als Abstützfläche bei Bremsungen aus der Vorwärtsfahrtrichtung. Bezogen auf die bevorzugte Drehrichtung U (entsprechend einer Vorwärtsfahrt) ist die weitere Seitenkante 112 einlaufseitig ausgebildet. Sie dient derart als Abstützfläche bei Bremsungen aus der Rückwärtsfahrtrichtung.

An den Seitenkanten 111, 112 - hier an deren im Belagschacht 11 untere Rändern - steht jeweils wenigstens ein Vorsprung 113, 114 in voneinander abgewandten Richtungen nach außen vor. Jeder dieser Vorsprünge 113, 114 greift jeweils in einen zugehörigen Hinterschnitt 17, 18 des Bremsträgers 3 (siehe Fig. 1b) ein, die jeweils in den Bremsträgerhörnern 13, 14 des zuspannseitigen Belagschachtes 11 ausgebildet sind. Derart ist der eingebaute zuspannseitige Bremsbelag 100 im Bremsträger 3 radial gesichert und auch gegen ein Ausdrehen bei Bremsungen gesichert. Die Vorsprünge dienen ferner als weitere Abstützbereiche bei Bremsungen. Beim Wechseln wird der neue Bremsbelag 100 radial eingesetzt und dann axial so verschoben, dass die Vorsprünge 113 und 114 in die Hinterschnitte 17, 18 greifen. Die Hinterschnitte 17, 18 sind vorzugsweise in den in den beiden Umfangsrichtung liegenden Abstützflächen der Trägerhörnern des Bremsträgers 3 ausgebildet.

Der zuspannseitige Bremsbelag 100 kann ferner eine Belagfeder 130 aufweisen. Diese ist an dem zuspannseitigen Bremsbelag gesichert. Dies wird hier wie folgt realisiert. Die Belagfeder 130 untergreift hier mittig einen an dem bzw. mit dem Belagträger 110 einstückig ausgebildeten Haltebügel 115. Die Belagfeder 130 ist derart radial gesichert. Die Belagfeder 130 weist ferner beidseits des Haltebügels jeweils einen Schlitz 131, 132 auf, der von Laschen/Vorsprüngen 116, 117 an der Oberseite des Belagträgers 110 durchsetzt ist. Derart ist die Belagfeder 130 axial und gegen ein Ausdrehen gesichert. Enden 133, 134 der Belagfeder 130 liegen vorzugsweise auf den Bremsträgerhörner 13, 14 federnd auf. Durch Federvorspannung wird derart der zuspannseitigen Bremsbelag 100 in seinem im Belagschacht 12 im Bremsträger 3 nach oben gezogen. Derart ist der zuspannseitige Bremsbelag 100 im Bremsträger 3 gut insbesondere radial gesichert und gehalten. Einen am Bremssattel festgelegten Niederhaltebügel benötigt er daher nicht. Durch die Feder wird auch ein Klappern sehr gut verhindert.

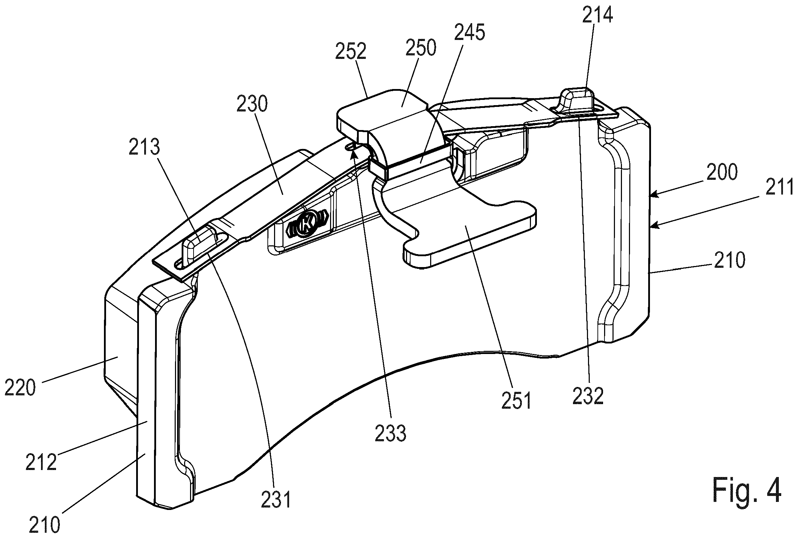

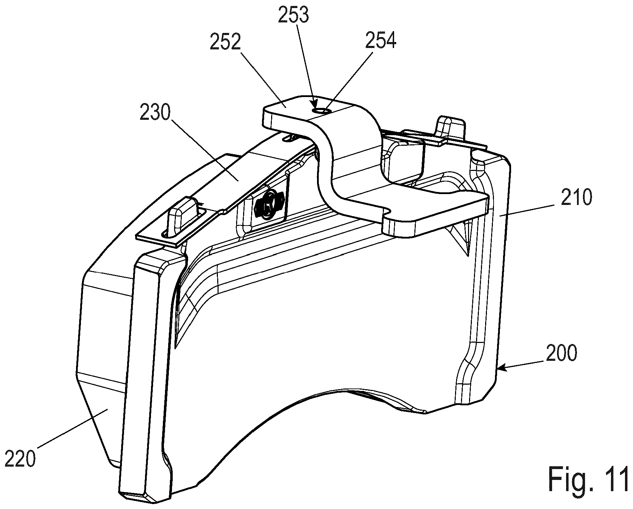

Der reaktionsseitige Bremsbelag 200 der **Fig. 4** oder der **Fig. 11** weist wiederum einen Belagträger 210 auf und das daran einseitig angeordnete Belagmaterial 220, das im eingebauten Zustand zur Bremsscheibe 2 gerichtet ist.

Der Belagträger 210 weist wiederum zwei Seitenkanten 211, 212 auf, die hier parallel ausgerichtet sind und zusätzlich parallel zu den zugehörigen Abstützflächen 12a, b der Bremsträgerhörner 15, 16 des reaktionsseitigen Belagschachtes 12 des Bremsträgers 3 (Fig. 1a) liegen.

Bezogen auf die bevorzugte Drehrichtung U (entsprechend einer Vorwärtsfahrt) ist die eine Seitenkante 211 wiederum auslaufseitig ausgebildet und dient derart als Abstützfläche bei Bremsungen aus der Vorwärtsfahrtrichtung. Bezogen auf die bevorzugte Drehrichtung U (entsprechend einer Vorwärtsfahrt) ist die weitere Seitenkante 212 wiederum einlaufseitig ausgebildet. Sie dient derart primär als Abstützfläche bei Bremsungen aus der Rückwärtsfahrtrichtung.

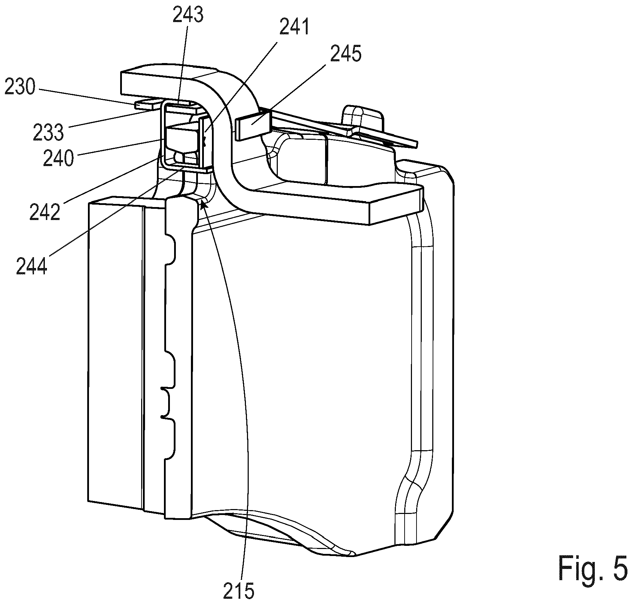

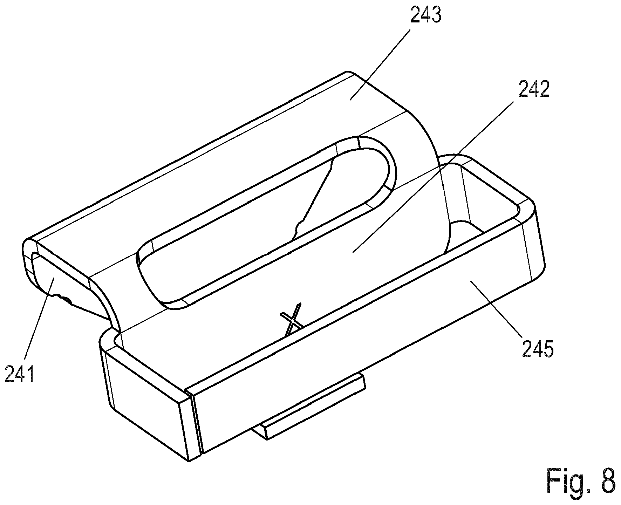

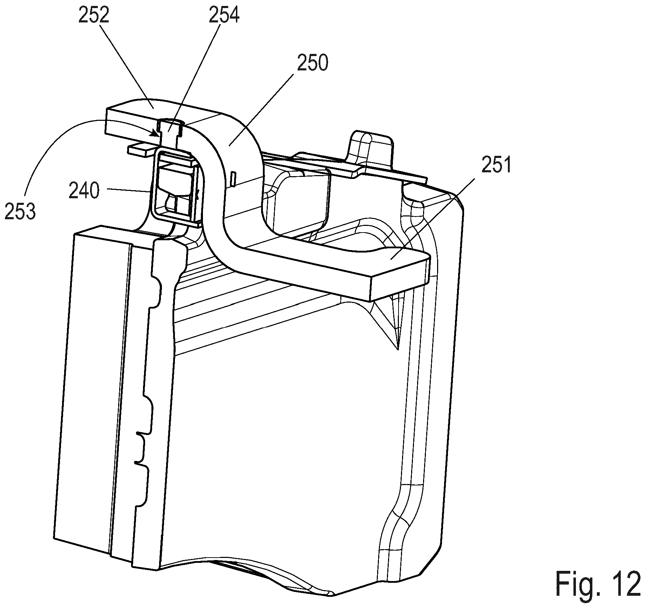

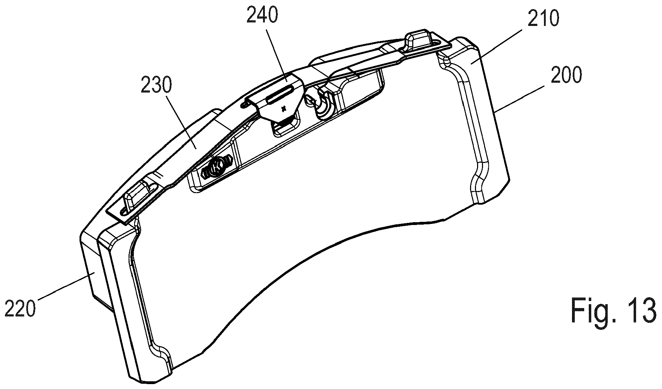

Der reaktionsseitige Bremsbelag 200 weist - siehe **Fig. 4** und **5** sowie **12, 13** und **15** - eine Belagfeder 230 auf. An der oberen Längskante des Belagträgers 210 ist die Belaghaltefeder 230 vorzugsweise mit einer Haube 240 - **Fig. 5****,** **6****,** **8** und **12**, 13 und **15** - unlösbar befestigt bzw. angeordnet/gehalten. Vorzugsweise ist die Haube 240 begrenzt an dem Belagträger 210 auslenkbar.

An den Seitenkanten 211, 212 - hier an deren im Belagschacht 12 unteren Rändern - des Belagträgers 210 steht jeweils hier kein Vorsprung in voneinander abgewandten Richtungen nach außen vor. Daher ist dieser Bremsbelag derart nicht radial gesichert. Er benötigt daher eine andere Einrichtung zur radialen Sicherung im Belagschacht. Um den reaktionsseitigen Bremsbelag 200 radial in seinem Belagschacht 12 zu sichern, ist (insofern) ein Niederhaltebügel 250 vorgesehen. Dieser kann ein- oder mehrstückig ausgelegt sein.

Der Niederhaltebügel 250 ist an seinem einen Ende 251 am Bremssattel 1 festgelegt, so dass er sich bei Bremsungen nicht von diesem löst. Zum Belagwechsel kann er hingegen vom Bremssattel 1 gelöst werden.

Der Niederhaltebügel 250 ist derart ausgelegt und derart bemessen, dass er lediglich den einen der beiden Bremsbeläge 100, 200 niederhält. Hier ist dies der reaktionsseitige Bremsbelag 220, den er niederhält, nicht aber der zuspannseitigen Bremsbelag 100, den er nicht radial sichert bzw. niederhält.

Der Niederhaltebügel 20 ist vorzugsweise senkrecht zu seiner Axialrichtung ein eher flaches Bauteil. Dies ist vorteilhaft aber nicht zwingend. Es ergibt sich aber eine platzsparende Ausgestaltung. Der Querschnitt des Niederhaltebügels 250 kann vorzugsweise rechteckig sein mit zwei parallelen Schmalseiten und zwei parallelen Langseiten.

Derart wirkt dieser Niederhaltebügel 250 mit dem Bremsbelag 220 zusammen. Der Bremsbelag 220 ist dazu ausgelegt, von diesem Niederhaltebügel 250 direkt oder über eines oder mehrere zwischengeschaltete Elemente niedergehalten zu werden. Er erstreckt sich vom Bremssattelrücken 1b aus parallel zur Bremsscheibenachse in die Sattelöffnung 1d, in welche er vorsteht, die er aber nicht vollständig überbrückt. Sein vom Bremssattel 1 abgewandtes Ende 252 übergreift den Belagträger 210 des reaktionsseitigen Bremsbelages 200. Dieses Ende 252 übergreift aber vorzugsweise nicht auch die Bremsscheibe 2 und weiter vorzugsweise nicht auch den zuspannseitigen Bremsbelag 100 (siehe Fig. **1** und **9****).**

Zudem wird auch die Sattelöffnung 1d nicht in axialer Richtung (parallel zur Bremsscheibe) vollständig übergriffen. Daher ist dieser Niederhaltebügel 250 konstruktiv einfach und dennoch sehr sicher. Er muss nur an einem Rand der Öffnung 1d am Bremssattel 1 befestigt werden, vorzugsweise an dem Sattelrücken 1b.

Vorzugsweise übergreift das vom Bremssattel 1 abgewandte Ende 252 des Niederhaltebügels 250 zumindest den Belagträger 210 des reaktionsseitigen Bremsbelages 200. Es übergreift ferner vorzugsweise auch axial ausgehend vom Bremssattel 1 die Haube 240, welche von der Belagfeder 230 oder einem Teil der Belagfeder 230 durchsetzt ist.

Nach einer Variante ist es vorteilhaft, wenn der Niederhaltebügel 250 den reaktionsseitigen Bremsbelag 200 nur axial übergreift und derart radial sichert, aber nicht an dem Bremsbelag 200 befestigt ist. Derart wird eine gute radiale Sicherung des reaktionsseitigen Bremsbelages 200 erreicht.

Nach einer weiteren Variante ist es hingegen vorteilhaft, wenn der Niederhaltebügel 250 an dem reaktionsseitigen Bremsbelag 200 auch befestigt ist. Derart wird eine einfach handhabbare Montageeinheit gebildet, die den Belagwechsel erleichtert.

Nach einer Weiterbildung dieser Variante ist es vorteilhaft, wenn der Niederhaltebügel 250 an dem reaktionsseitigen Bremsbelag 200 unlösbar befestigt ist.

Derart wird einerseits eine einfach handhabbare Montageeinheit gebildet und andererseits sichergestellt, dass bei einem Belagwechsel auch sicher der (infolge vieler Bremsungen stark belastete) Niederhaltebügel 250 mit ausgetauscht wird.

Zum Lösen wird lediglich die Fixierung des Niederhaltebügels 250 am Bremssattel 1 gelöst. Dann wird der reaktionsseitige Bremsbelag 200 mitsamt dem Niederhaltebügel 250 als Baueinheit gewechselt. Vorzugsweise umfasst diese Baueinheit vorteilhaft auch die Belagfeder 230. Und weiter vorzugsweise umfasst diese Baueinheit vorteilhaft auch die Haube 240.

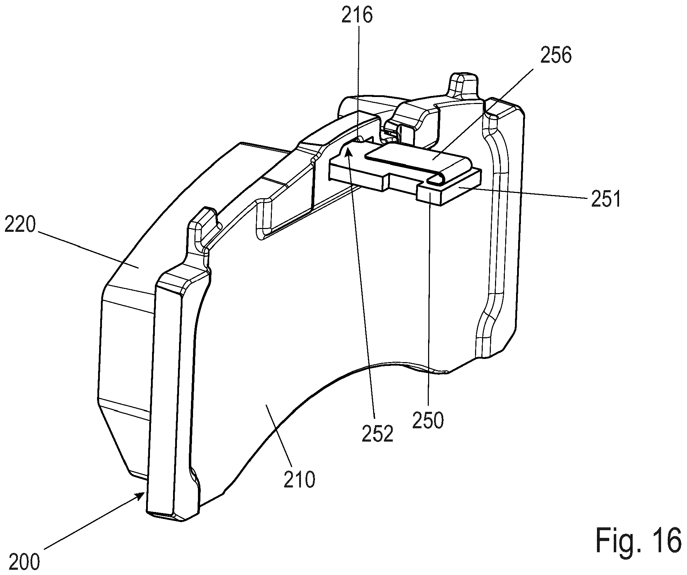

Das Befestigen des Niederhaltebügels 250 an dem reaktionsseitigen Bremsbelag 220 kann auf verschiedene Weise erfolgen, so durch eine formschlüssige oder stoffschlüssige Verbindung mit einem Teil des reaktionsseitigen Bremsbelages 220. Als dieses Teil bietet sich nach einer Variante - siehe Fig. 16 - der Belagträger 210 an oder es bietet sich die Belagfeder 230 an (jeweils nicht dargestellt). Und als dieses Teil bietet sich - wenn vorhanden - auch die Haube 240 an. Diese vorteilhafte Variante ist in den Zeichnungen Fig. 1 bis 15 realisiert worden.

Der Niederhaltebügel 250 kann mit der Haube 240 stoffschlüssig verbunden, so beispielsweise mit dieser direkt oder indirekt (über ein Zwischenteil wie einen Bolzen) verschweißt oder verlötet sein. Der Niederhaltebügel 250 kann auch an die Haube 240 angeschraubt sein oder an der Haube 240 mit einem Niet befestigt sein (nicht dargestellt).

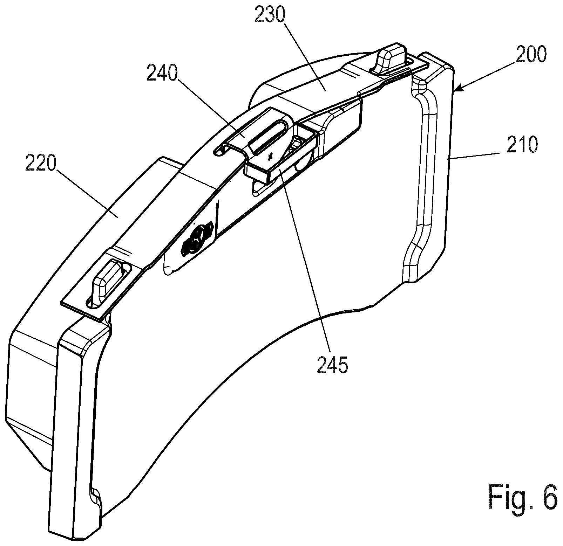

Alternativ ist es auch vorteilhaft, wenn die Haube 240 ein einstückig angeformtes Teil wie einen Arm oder mehrere Arm oder sogar einen umfangsgeschlossenen Ring 245 **(****Fig. 6****)** aufweist, welche/welcher vorzugsweise einstückig mit ihr ausgebildet ist/sind und mit welchen der Niederhaltebügel 250 unlösbar an die Haube 240 angebunden wird. Der Ring 245 wird vorzugsweise von dem Niederhaltebügel 250 durchsetzt **(****Fig. 4****).** Ergänzend kann der Niederhaltebügel 250 an dem Ring 245 stoffschlüssig z.B. schweißend festgelegt sein.

In einer Seitenansicht (siehe z.B. **Fig. 4****)** kann der Niederhaltebügel 250 gestuft ausgebildet sein. Dies dient u.a. dazu, um einen Höhenversatz zum Bremssattel 1 auszugleichen. Diese Z-Form kann zudem auch für ein einfaches und unkompliziertes Festlegen des Niederhaltebügels 250 an dem Bremssattel 1 genutzt werden.

Das eine Ende des Niederhaltebügels 250, welches an dem Bremssattel 1 befestigt ist, kann dort auf verschiedenste Weise festgelegt sein. Vorteilhaft ist, dieses Ende mit einem Stift 255 **(****Fig. 1a****,** **Fig. 9****)** am Bremssattel 1 formschlüssig zu fixieren. Dazu durchsetzt der Stift 255 Öffnungen 1e, die hier Bohrungen sind, in zwei beabstandeten Laschen 1f am Bremssattel 1 und übergreift den Niederhaltebügel 250, dessen Ende 251 am Bremssattel 1 zwischen den Laschen 1f liegt. Eine hier T-förmige Ausgestaltung des Endes 251 stellt sicher, dass der Niederhaltebügel 250 nicht in axialer Richtung durch die Laschen 1f rutschen kann.

An den beiden Enden der Belaghaltefeder 230 - siehe wieder **Fig. 4** - sind Schlitze 231, 232 vorgesehen, die von an den Belagträger 210 angeformten Laschen oder Vorsprüngen 213, 214 an der Oberseite des Belagträgers 210 durchsetzt sind.

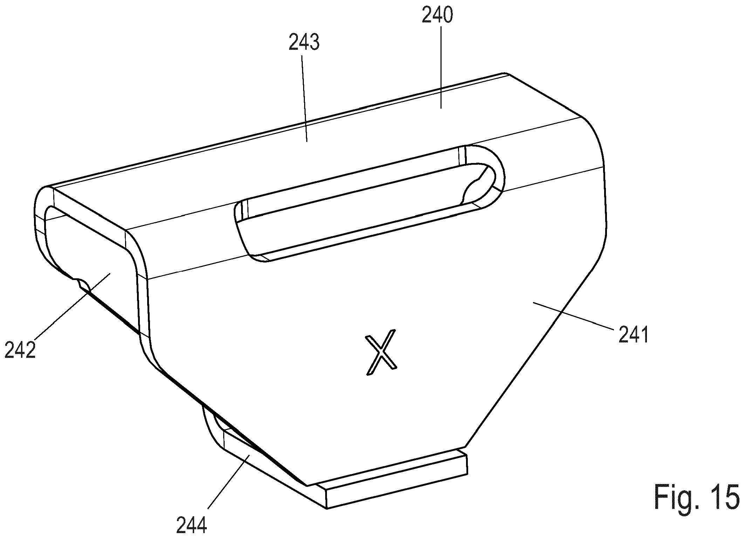

Zur vorzugsweise unlösbaren Verbindung der Belaghaltefeder 230 mit dem Belagträger 210 ist die Haube 240 vorgesehen, die, wie insbesondere in Fig. **4** und auch **Fig. 15** zu sehen, vorzugsweise einen im Querschnitt nahezu rechteckigen Querschnitt aufweist, mit zwei parallelen Schenkeln 241, 242, die durch einen Steg 243 oberhalb des Belagträgers 210 und einen weiteren Steg 244 (der eine Öffnung des Belagträgers 210 durchsetzt) miteinander verbunden sind.

Etwa mittig zwischen den Schlitzen 231, 232 ist in die Belaghaltefeder 3 ein Längsschlitz 233 eingebracht, durch den der eine der Schenkel 242 der Haube 240 gesteckt ist, der ebenso wie der gegenüberliegende Schenkel 241 an einer zugeordneten Breitseite des Belagträgers 210 anliegt oder nahezu anliegt.

Wie in der **Fig. 5** weiter deutlich erkennbar ist, ist die Belaghaltefeder 230 vorzugsweise breiter bzw. dicker als die axiale Dicke des Belagträgers 210, so dass die Belaghaltefeder 230 in Richtung des Reibbelages 220 übersteht, während ihre andere Längskante etwa mit der Rückseite des Belagträgers 210 fluchtet. In der Fig. 5 ist auch zu erkennen, dass sich an den Schenkel 241 unten der Verbindungssteg 244 anschließt, der parallel zum Steg 243 verläuft.

Durch eine vorzugsweise stoffschlüssige Verbindung ist ein zerstörungsfreies Lösen der Haube 240 ausgeschlossen, wodurch eine sichere Befestigung der Belaghaltefeder 230 gewährleistet ist. Die Haube 240 kann dazu auch stoffschlüssig an der Belaghaltefeder 230 oder dem Belagträger 210 befestigt sein.

Im Übrigen sind die Schenkel 241, 242 in ihrem Grundriss hier vorzugsweise trapezförmig gestaltet, wobei die Breitseite durch den Steg 243 gebildet wird, während der Verbindungsteg 244, welcher hier das Durchgangsloch 215 in dem Belagträger 210 verschieblich durchsetzt, die schmalere Seite definiert. Wie bereits ausgeführt, ist der Längsschlitz 233, bezogen auf die Längserstreckung der Belaghaltefeder 230, vorzugsweise etwa mittig angeordnet. Ganz besonders bevorzugt ist er genau mittig angeordnet (siehe auch zum Hintergrund die Patente EP 1 963 702 B1 und der EP 2 255 101 B1).

Vorzugsweise ist die Haube 240 an dem Belagträger 210 begrenzt radial auslenkbar. Dazu durchsetzt die Haube 240 mit dem Steg 244 das Durchgangsloch 215.

Da der reaktionsseitige Bremsbelag 220 seine Position im Bremssattel 1 auch mit zunehmendem Verschleiß nicht verändert, ist es möglich, den Niederhaltebügel 250 direkt als Baueinheit mit dem reaktionsseitigen Bremsbelag 200 auszubilden. Hierzu bietet sich die Haube 240 besonders an, die derart um eine weitere, bisher nicht bekannte Funktion - die Fixierung des Niederhaltebügels - erweitert wird (so in Figur 4, 11 sowie 5 und 12). Derart wird ein besonders vorteilhafter reaktionsseitiger Bremsbelag 200 geschaffen, der einen kurzen und vorteilhaft auf die Funktion des Niederhaltens dieses einen Bremsbelages beschränkte Bauform aufweisenden Niederhaltebügel 250 als vorzugsweise integrierten Bestandteil aufweist. Zu nennende Vorteile sind auch die einfache Montage, reduzierte Herstellkosten, kleinere Belastungen und eine Gewährleistung eines korrekten Einbaus.

Vorteilhaft ist daher die Ausgestaltung des Niederhaltebügels 250 mit diesem Bremsbelag als Baueinheit, die als Ganzes beim Belagwechsel ausgetaucht wird. Dies ist einfach und führt zu einer Erneuerung aller zu wechselnden Elemente an der Baueinheit "reaktionsseitiger Belag" (Bremsbelag, Belagfeder, wenn vorhanden: Haube und Niederhaltebügel).

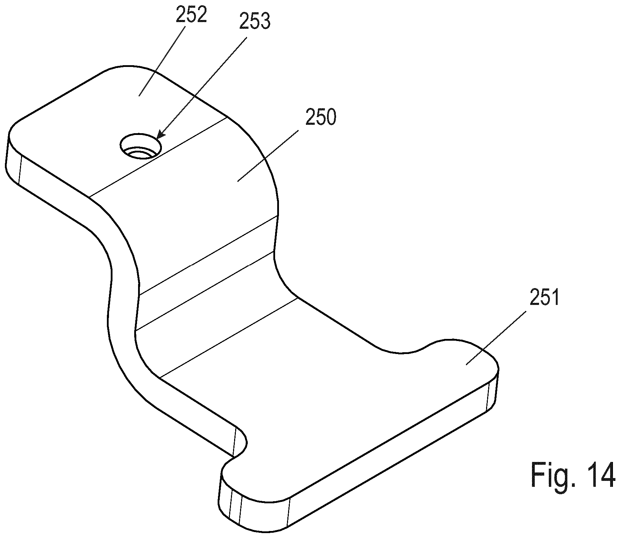

Während nach **Fig. 2 bis 8** der Niederhaltebügel 250 den Ring 245 der Haube 240 durchsetzt, an dem er vorzugsweise auch stoffschlüssig festgesetzt ist, ist nach **Fig. 9 bis 15** vorgesehen, einen Stift (Bundbolzen, Kopfbolzen oder dgl.) 254 zur Befestigung des Niederhaltebügels 250 an der Haube 240 und damit an dem Bremsbelag 200 zu nutzen. Der Stift 250 durchsetzt den Niederhaltebügel im Bereich einer Bohrung 253 (Fig. 14) radial und ist beispielsweise an die Haube 240 angeschweißt oder dort in anderer Weise befestigt (z.B. durch Nieten, Pressen usw.). Der Ring 245 kann aus Laschen der Haube 240 gebildet sein und umfangsgeschlossen oder nicht umfangsgeschlossen ausgebildet sein.

Der Niederhaltebügel 250 kann auch direkt an der Belagfeder 230 oder an dem Belagträger 210 angeordnet werden (die letztgenannte Variante ist beispielhaft in Fig. 16 dargestellt).

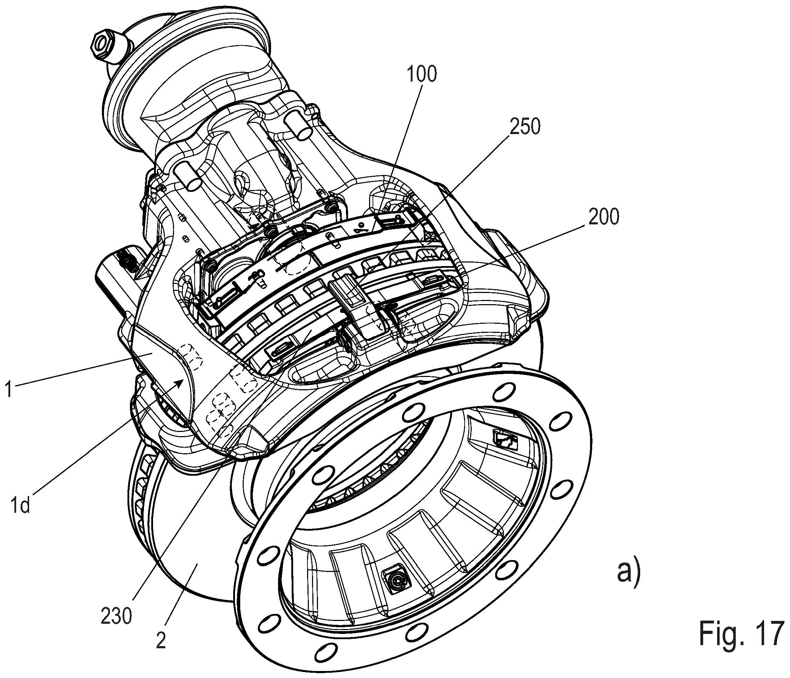

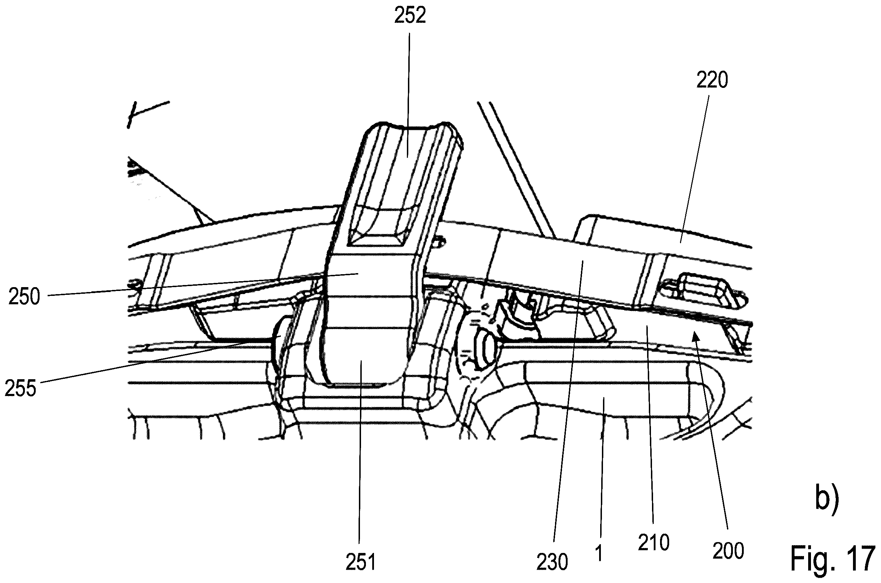

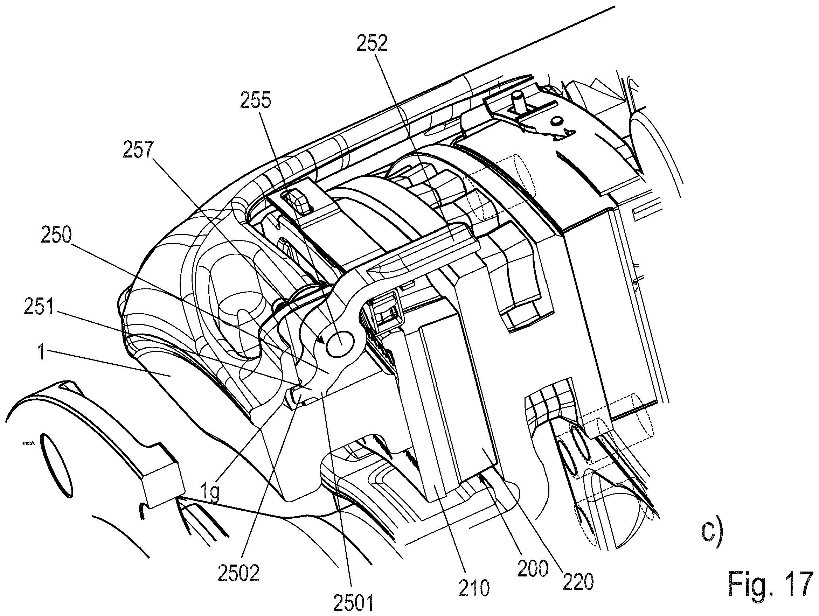

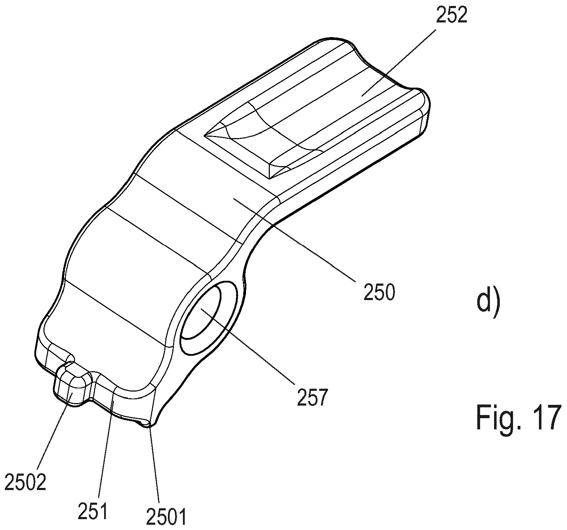

Der Belagträger 210 weist nach Fig. 16 eine Öffnung 216 auf, in welche das zum Belagträger 210 weisende Ende 252 (dies bedeutet auch "ein näher zum Belagträger 210 liegender Abschnitt") des Niederhaltebügels 250 eingreift. Die Öffnung 216 kann sacklochartig ausgestaltet sein oder als Durchgangsöffnung. Das andere Ende 251 des Niederhaltebügels 250 (bzw. ein näher zum Bremssattel 1 liegender Bereich) kann an/in der Öffnung 1d (vorzugsweise unlösbar) form- und/oder stoffschlüssig festgelegt sein. Das näher zum Bremssattel 1 liegende Ende 251 des Niederhaltebügels 250 weist zum Bremssattel 1 und wird dort (vorzugsweise lösbar) form- und/oder stoffschlüssig (in hier nicht dargestellter Weise, z.B. ähnlich zu Fig. 1a oder 17 festgelegt. Ergänzend kann eine Feder 256 an dem Niederhaltebügel 250 vorgesehen sein, welche für eine federnde Abstützung dieses Bremsbelages 210 relativ zu einem Widerlager wie dem Bremssattel 1 nutzbar ist (hier nicht dargestellt).

Der Niederhaltebügel 250 kann derart die Belagrückenplatte bzw. den Belagträger 210 ganz oder teilweise durchgreifen. Anschließend wird auf dem Niederhaltebügel die Feder 256 befestigt. Derart ist der Niederhaltebügel - wie oben bereits erwähnt - nebst Feder 256 unverlierbar mit dem reaktionsseitigen Bremsbelag 200 verbunden. Die Belaghaltefeder wird derart vom Bremsbelag 200 weg verlagert bzw. axial beabstandet. Dies bietet die eingangs hierzu beschriebenen Vorteile.

Nach **Fig. 17a****,** **17b****,** **17c** **und** **17d** weist der Niederhaltebügel 250 eine Durchgangsöffnung 257 (z.B. eine Bohrung) vorzugsweise parallel zur Bremsscheibe 2 auf, um das eine Ende 251 des Niederhaltebügels 250, welches an dem Bremssattel 1 befestigt ist, dort mit einem/dem Bolzen bzw. Stift 255 zu halten, der hier parallel zur Ebene der Bremsscheibe 2 verläuft. Dazu durchsetzt der Bolzen bzw. Stift 255 die Durchgangsöffnung 257 und die Laschen 1f am Bremssattel 1. Der Bolzen bzw. Stift 255 hat an einem Ende einen Kopf 255a außerhalb der beiden Laschen 1f und wird mit einem Sicherungselement 260 (hier Scheibe und Splint) an seinem anderen Ende gesichert. Ein Formschlussmittel wie ein Vorsprung 258 unten am Belaghaltebügel an dem anderen Ende 252 des Niederhaltebügels am Belagträger 210 oder an der Belagfeder 230 wirkt formschlüssig mit einem korrespondierenden Formschlussmittel an dem Belagträger 210 zusammen, so dass der Bremsbelag axial und radial fixiert ist. Das Ende 251 des Niederhaltebügels 250, welches an dem Bremssattel 1 befestigt ist, greift zudem axial in eine Ausnehmung 1g des Bremssattels 1, die den Niederhaltebügel 250 zusätzlich am Bremssattel sichert.

Eine Kontur 2502 (eine Art Vorsprung) am Ende 251 des Niederhaltebügels 250 am Bremssattel 1 begrenzt das Verdrehen des hier vorzugsweise nicht mit dem Bremsbelag 200 verbunden Niederhaltebügels 250 und gewährleistet das Einhalten einer vorgegebenen Hüllkontur der Bremse. Bei den vorgenannten Varianten wird dies ebenfalls durch das Ende 251 des Niederhaltebügels 250 am Bremssattel 1 realisiert. Eine weitere Kontur 2501 (ein Vorsprung nach unten) am Niederhaltebügel, welche in die Ausnehmung 1g eingeschoben wird, erleichtert die Montage des Niederhaltebügels 250, welcher gegen eine Belagfeder 230 gedrückt werden muss, um den Bolzen 255 einzuführen.

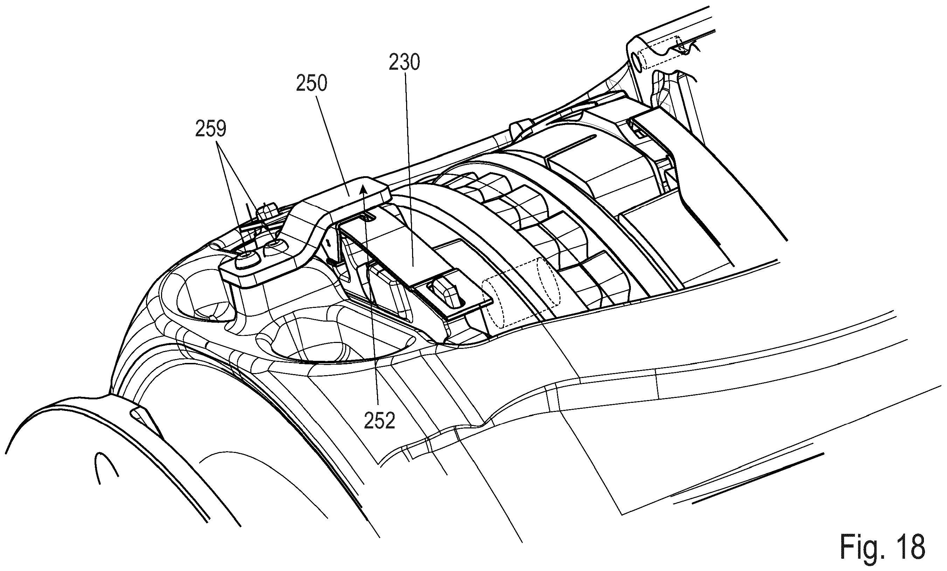

Nach **Fig. 18** wird der Niederhaltebügel 250 am Bremssattel 1 in einfacher Weise mit einer oder mehreren Schrauben 259 lösbar befestigt, die in den Bremssattel 1 eingeschraubt sind, z.B. in hier radialer Richtung.

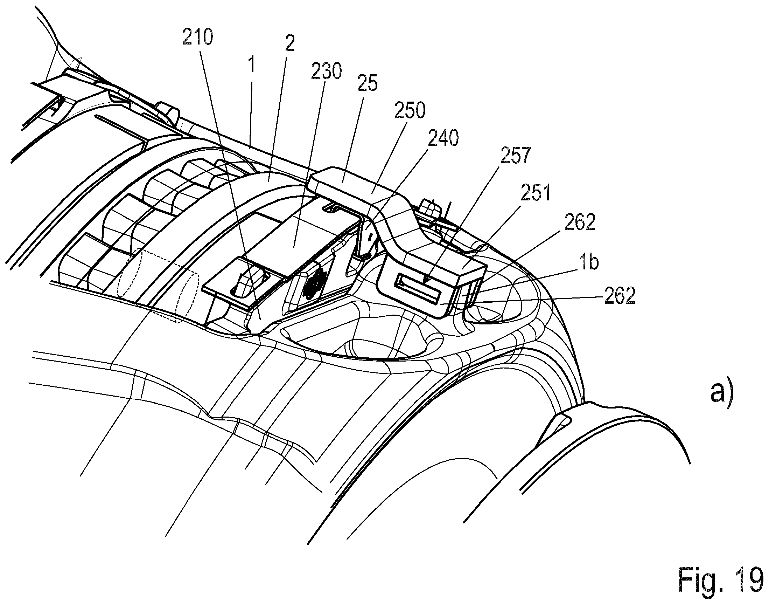

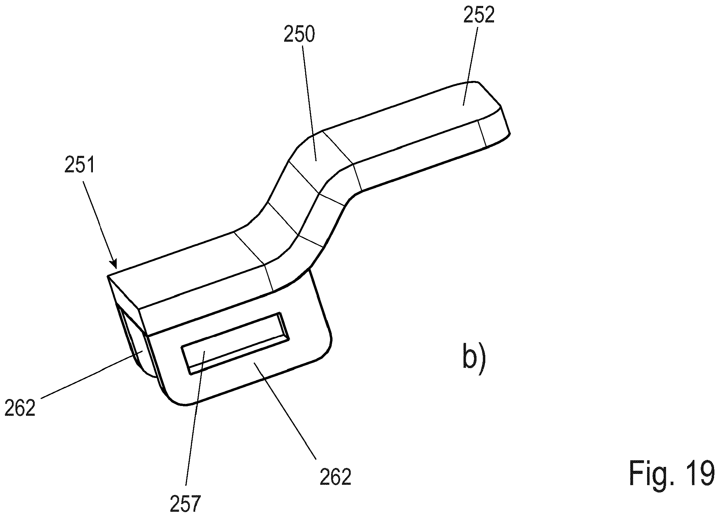

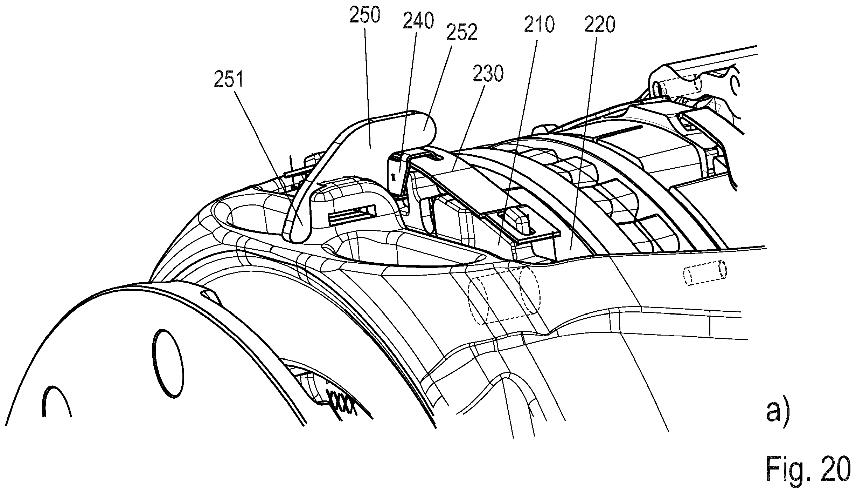

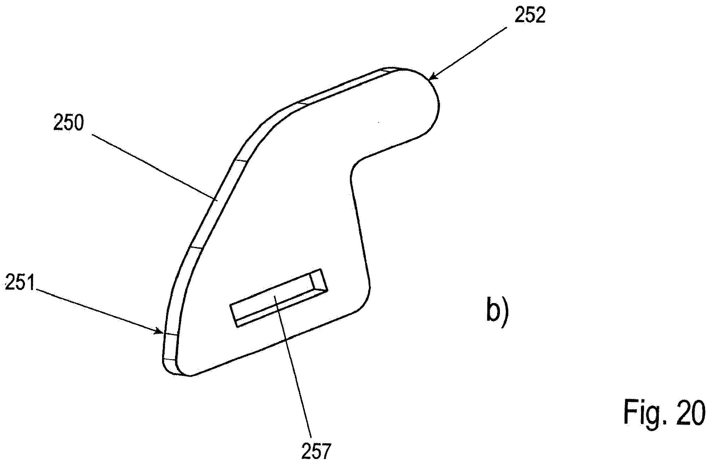

Eine bzw. die Durchgangsöffnung 257 oder die Durchgangsöffnungen 257 für den Bolzen bzw. Stift 255 zum Befestigen bzw. Halten des Niederhaltebügels 250 kann einen runden Querschnitt aufweisen oder einen anderen, so einen eckigen (dargestellt in **Fig. 19a****,** **Fig. 19b****;** **Fig. 20a****,** **Fig. 20 b)****.** Der Stift kann dazu passend die Form eines Rundstiftes bzw. eines Flachsteges aufweisen (hier nicht dargestellt, der an einem Ende auch gebogen ausgebildet sein kann bzw. eine Abwinklung aufweisen kann oder einen vergrößerten Kopf, so dass er einseitig an der Durchgangsöffnung anliegt und nicht durch diese durchrutschen kann). Auf der anderen Seite der Durchgangsöffnung kann er mit einem Splint oder einer Mutter auf einem Gewindeabschnitt oder mit einem anderen geeigneten Mittel gesichert werden. Der Stift 255 in Form des Flachsteges wird durch eine oder mehrere Durchgangsöffnung(en) 257 des Niederhaltebügels 250 und eine oder mehrere entsprechende Durchgangsöffnung(en) der Lasche oder Laschen 1f am Bremssattel 1 gesteckt und fixiert. Derart wird auch eine Verdrehsicherung für den Niederhaltebügel 250 realisiert.

Der Niederhaltebügel 250 kann auf verschiedene Weise hergestellt werden. Er kann als Stanz-/Biegeteil (siehe z.B. **Fig. 19a** (als flach auf dem Bremsbelag 200 aufliegender Flachsteg mit zwei Laschen 261) oder **Fig. 20a** (als senkrecht auf dem Bremsbelag 200 aufliegender Flachsteg)) ausgebildet sein oder beispielsweise als gegossenes Teil oder als ein auf andere Weise hergestelltes Teil.

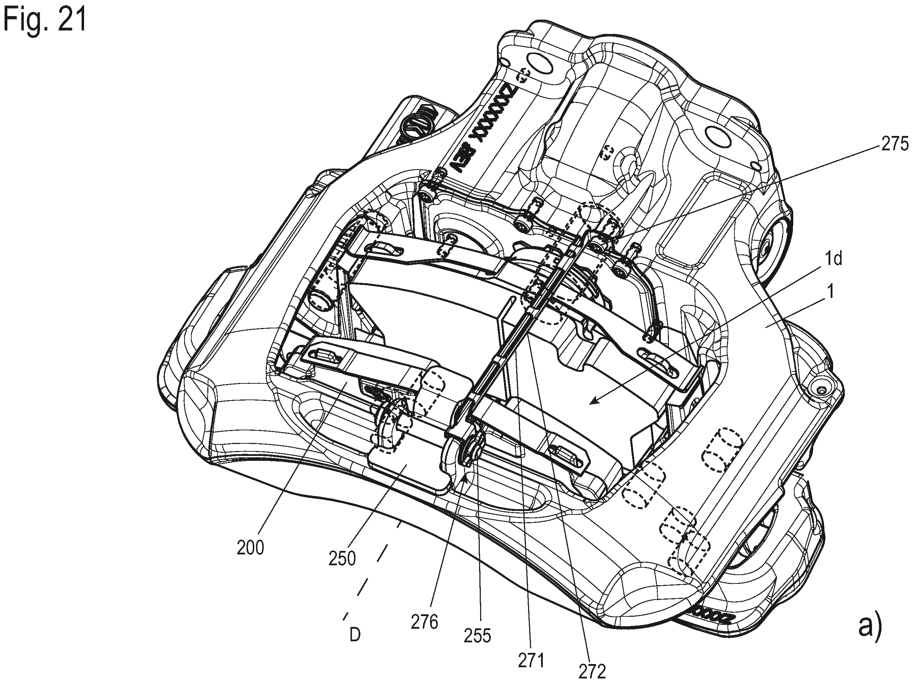

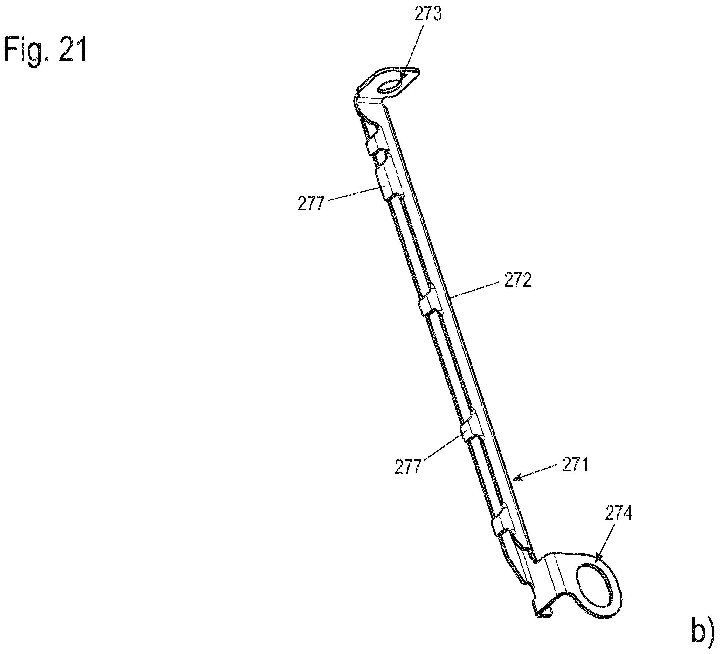

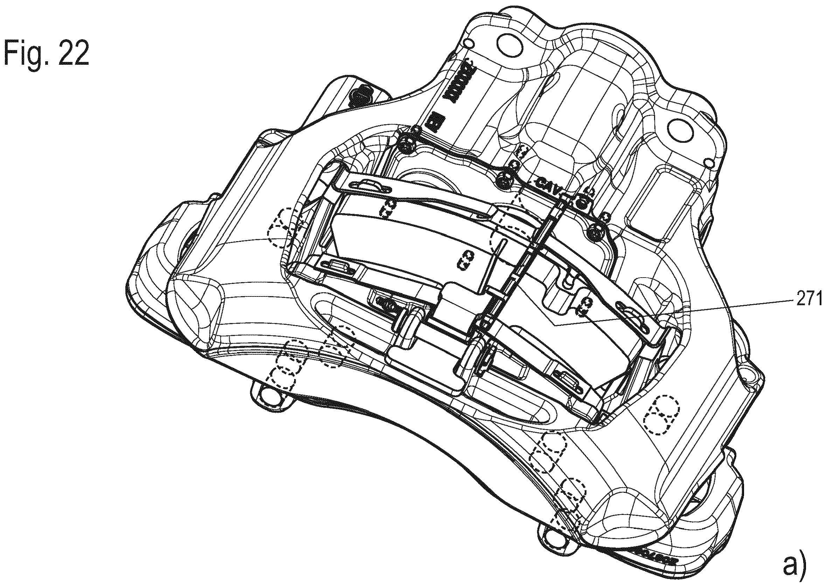

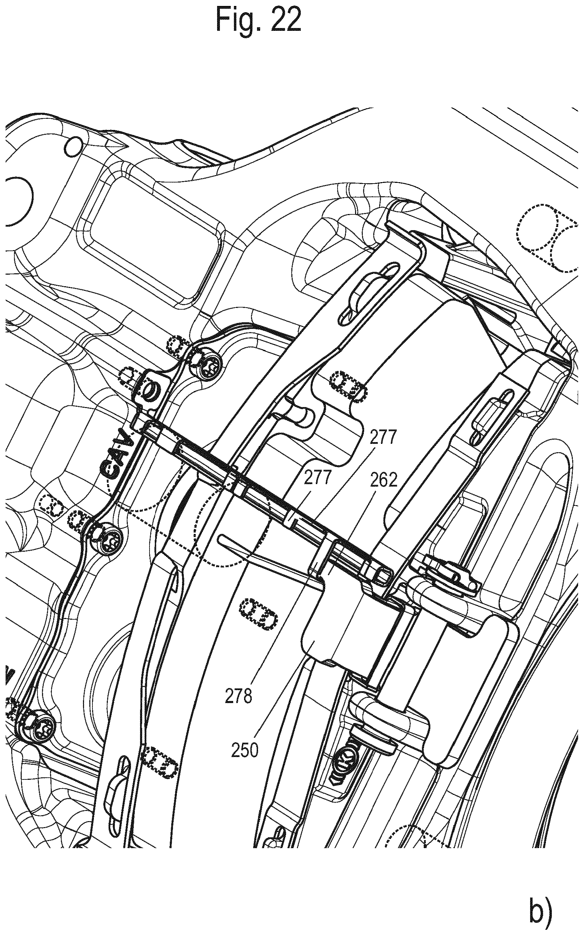

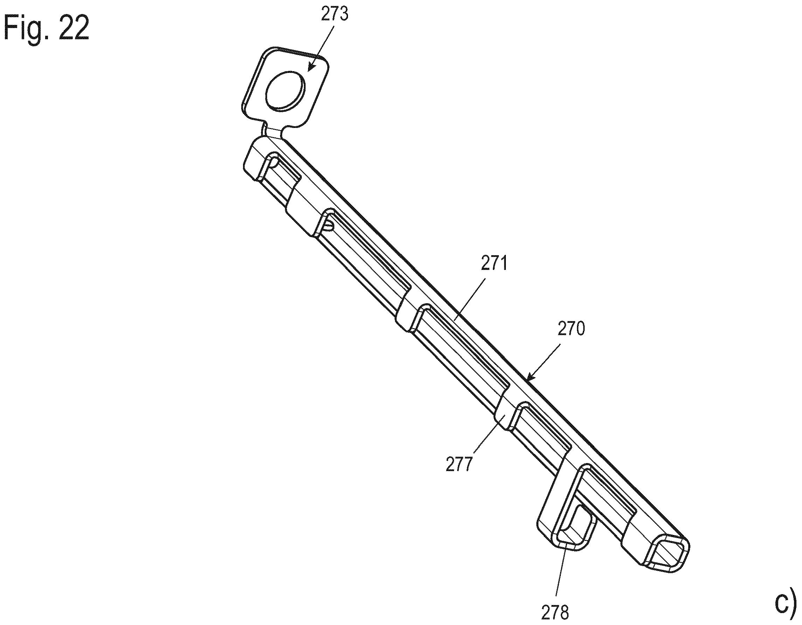

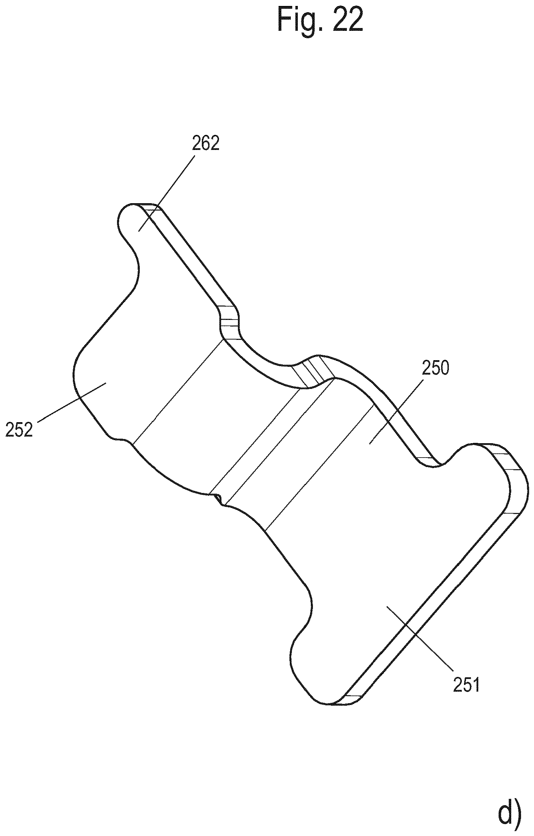

Nachfolgend werden die Ausführungsbeispiele der **Fig. 21a**, b und 22 a-c näher betrachtet.

Zur Verschleißerkennung eines infolge von Bremsungen auftretenden Verschleißes der Bremsbeläge bzw. derer Reibbeläge 220 ist in diese jeweils ein Verschleißsensor (hier nicht dargestellt) integriert. Mit den Verschleißsensoren ist jeweils ein Signalkabel (hier nicht dargestellt) verbunden. Dieses weist wenigstens einen Leiter auf, vorzugsweise wenigstens einen elektrischen Leiter. Der wenigstens eine Leiter kann von einer Isolierung und/oder einem Kabelmantel umgeben sein.

Wenigstens eines der Signalkabel ist, die Öffnung 1d des Bremssattels 1 vollständig überquerend, verlegt und - (hier nicht zu erkennen) zu einer Bremsbelagverschleiß- Ermittlungs- und ggf. Anzeigeeinrichtung der Scheibenbremse geführt. Dazu ist das Signalkabel an einer Kabelbrücke 271 angeordnet und gehalten. Die Kabelbrücke 271 brückt bzw. übersetzt die Öffnung 1d des Bremssattels 1 vollständig. Vorzugsweise brückt sie die Öffnung 1d in axialer Richtung parallel oder im Wesentlichen parallel zur Bremscheibendrehachse bzw. -achse vollständig.

Die Kabelbrücke 271 kann aus Metall bestehen. Sie kann zudem vorteilhaft einfach als ein Stanz-/Biegeteil aus einem Metallblech ausgebildet sein. Sie kann aber auch aus einem anderen Material bestehen.

Die Kabelbrücke 271 weist vorzugsweise einen mittleren Stegabschnitt 272 auf. Dieser Stegabschnitt 272 ist hier gerade ausgestaltet. Er erstreckt sich hier im eingebauten Zustand parallel zur oder im Wesentlichen parallel zur Bremsscheibendrehachse D.

Der Stegabschnitt 272 weist vorzugsweise an seinen beiden voneinander abgewandten Enden erste und zweite Befestigungsmittel 273 und 274 auf. Diese ersten und zweiten Befestigungsmittel 273 und 274 des Kabelhalters bzw. der Kabelbrücke 271 271 dienen zur Befestigung des Kabelhalters 271 an korrespondierenden ersten und zweiten Gegenbefestigungsmitteln 275, 276 des Bremssattels 1 - Fig. 21 - oder eines am Bremssattel 1 befestigten Elementes - Fig. 22.

Die ersten und zweiten Befestigungsmittel 273 und 274 des Kabelhalters bzw. der Kabelbrücke 271 und die korrespondierenden ersten und zweiten Gegenbefestigungsmittel 275, 276 des Bremssattels 1 können auf einer Seite der Öffnung 1d eine weitestgehend toleranzfreie erste Befestigung bzw. auf der anderen Seite der Öffnung 1d des Bremssattels 1 eine toleranzausgleichend wirkende zweite Befestigung ausgebildet sein.

Dazu können die ersten und zweiten Befestigungsmittel 273, 274 nach einer - konstruktiv baulich einfach realisierbaren - Variante als ein Kreisloch 273 und ein Langloch 274 an bzw. in den gegenüberliegenden Enden des Kabelhalters 271 ausgebildet sein. Die korrespondierenden Gegenbefestigungsmittel 275, 276 können dann beispielsweise vorteilhaft und einfach als Schrauben 275, 276 oder Stifte oder dgl. des Bremssattels 1 ausgebildet sein, die am Bremssattel 1 festgelegt sind, beispielsweise in Bohrungen des Bremssattels 1 festgeschraubt sind.

Wenn das eine Ende des Niederhaltebügels 250, welches an dem Bremssattel 1 befestigt ist, mit einem Stift 255 **(****Fig. 1a****,** **Fig. 9****;** **Fig. 21****)** am Bremssattel 1 formschlüssig fixiert ist, kann dieser am Bremssattel 1 festgelegte Stift 255 die Bohrung 276 - vorzugsweise das Langloch zum Toleranzausgleich - durchsetzen. Das Langloch 276 kann sich dann auf dem Stift verschieben. Das Ende des Niederhaltebügels 250 mit der Bohrung 276 ist dann wie eine Unterlegscheibe zwischen einem Kopf des Stiftes 255 und einer Anlagefläche des Bremssattels 1 angeordnet. Diese Befestigungsvariante ist konstruktiv einfach und kostengünstig, da ein einziges Befestigungsmittel - der Stift 255 - doppelt genutzt wird.

Der Querschnitt des Stegabschnittes 272 des Kabelhalters 271 ist nach einer bevorzugten Ausführung vorzugsweise U-förmig. Dabei ist die geschlossene Seite des U vorzugsweise zu den Bremsbelägen 100, 200 hin gewandt, um derart eine Schirmung gegen Wärme, die von der Bremsscheibe und den Bremsbelägen abgestrahlt wird, zu realisieren. Das Signalkabel kann dann in den U-förmigen Stegabschnitt 272 hineingelegt und in diesem befestigt sein. Dazu können Laschen 277 an dem Stegabschnitt 272 ausgebildet sein, die nach dem Einlegen des Signalkabels 271 in den Stegabschnitt 272 so umgebogen werden, dass das Signalkabel abschnittsweise ganz oder im Wesentlichen umfangsgeschlossen an dem Stegabschnitt 272 gehalten ist.

Der Stegabschnitt 272 kann die Öffnung 1d frei übergreifen. Dies bedeutet, dass der Stegabschnitt 272 nur an den beiden Enden - beispielsweise nach der vorstehend beschriebenen Art an dem Bremssattel 1 befestigt ist und vorzugsweise nicht an anderen Elementen der Scheibenbremse.

Der Stegabschnitt 272 kann aber auch optional oder alternativ (an einem seiner Enden oder eher mittig im Stegbereich 271) an dem die Öffnung 1d nicht vollständig überquerenden Niederhaltebügel 250 festgelegt sein, der nur einen der beiden Bremsbeläge 100, 200 niederhält.

Dazu ist es vorteilhaft, wenn eine weitere Lasche 278 des Stegabschnittes 272 an dem Belaghaltebügel 250 festgelegt ist (siehe **Fig. 22a****-c).** Dieses Festlegen kann auf verschiedene Weise erfolgen. So kann es nach einer bevorzugten Variante derart erfolgen, dass die Lasche 278 um einen Steg 262 an dem Niederhaltebügel 250 gelegt ist und diesen umfasst. Es ist dabei weiter vorteilhaft, wenn der Steg 272 wie eine Art Fingerelement axial vom Ende des Niederhaltebügels 250 vorsteht, an dem er den ihm zugeordneten Bremsbelag radial niederhält. Derart ist es auf einfache Weise möglich, dass sich der Niederhaltebügel 250 und der Stegabschnitt 271 relativ zueinander begrenzt bewegen, insbesondere verschwenken können. Solche Relativbewegungen können bei Bremsungen auftreten. Die Lasche 278 kann dann allein das Gegenbefestigungsmittel 276 bilden. Dier Niederhaltebügel 250 ist ein an dem Bremssattel 1 befestigtes Teil, so dass die Kabelbrücke 271 derart wiederum - indirekt - an dem Bremssattel 1 befestigt ist.

Der Stegabschnitt 272 kann an dem Belaghaltebügel 250 aber auch auf andere Weise befestigt ein, beispielsweise mittels wenigstens einer Schraube oder einem Niet.

Es ist insofern - die Variante der Fig. 22 abstrahierend - vorteilhaft, wenn die Kabelbrücke 271 an dem Niederhaltebügel 250, insbesondere an dem Steg 262 des Niederhaltebügels 250, kraft- und/oder formschlüssig befestigt ist. Ein Kraftschluss kann beispielsweise durch ein klemmendes seitliches Anbringen der Kabelbrücke 272 an dem Niederhaltebügel 250 realisiert werden (nicht dargestellt). Dabei ist insbesondere ein seitliches - tangentiales - Ansetzen in Umfangsrichtung an den Niederhaltebügel 250 an einer Schmalseite des Niederhaltebügels 250 möglich.

Gebildet wird derart eine Art von Kabelbrücke 272, welche vorzugsweise die Funktion einer Kabelführung sowie einer thermischen und mechanischen Abschirmung übernimmt. Dabei ist die Kabelbrücke 272 hier wiebeschreiben einerseits auf der Zuspannseite am Bremssattel 1 fest angebunden (Schraubverbindung). Auf der Reaktionseite ist eine Art toleranzausgleichend wirkende Loslagerung derart dargestellt, dass die Kabelbrücke über ein Langloch am Belaghaltbügelbolzen bzw. Stift 255 fixiert ist. Somit kann die Kabelbrücke 272 gut die Sattelverformung kompensieren.

Die Befestigung kann aber auch so dargestellt werden, das der Belaghaltebolzen bzw. Stift als Festlager und die Befestigung am Sattel auf er aneren Seite der Öffnung 1d als Loslager ausgeführt wird.

Die Kabelführung an der Kabelbrücke 272 ist so ausgeführt, das sie so weit wie möglich von der Bremsscheibe entfernt ist, um die Temperaturbelastung so gering wie möglich zu halten. Anderseits wird die Kabelführung so plaziert, das sie sich im Schatten der axialen Zugstreben des Bremssattels 1 befindet, damit sie vor Fremdkörpern (z.B. Eis, Schmutz, Steine) welche von der Felge mitgenommen werden, gut geschützt ist. Das ermöglicht eine Reduzierung der Blechstärke an der Kabelführung auf ein Minimum.

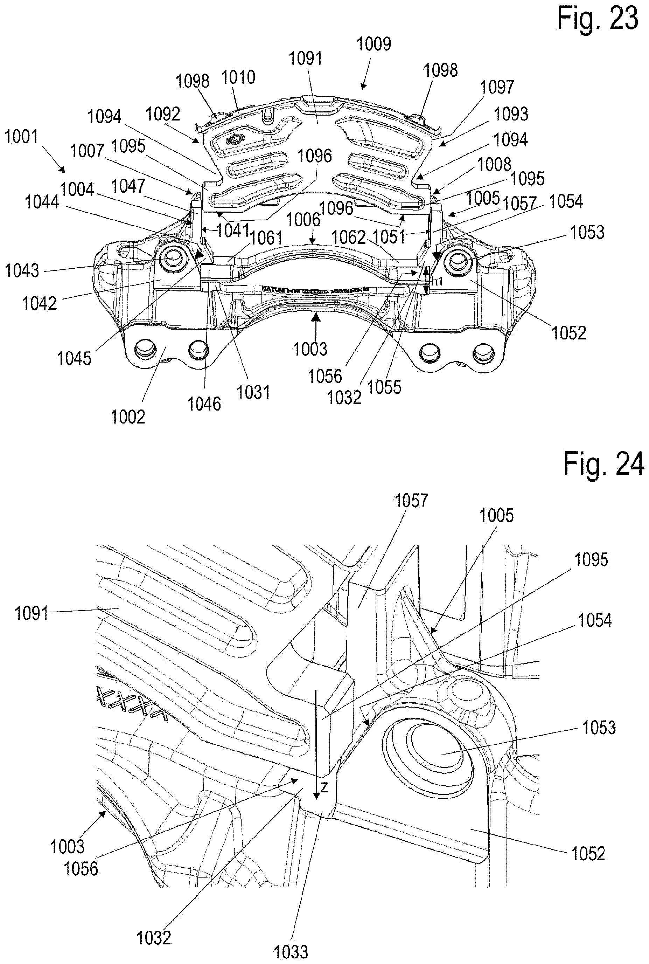

In der nachfolgenden Figurenbeschreibung der Fig. 23 ff. beziehen sich Begriffe wie oben, unten, links, rechts, vorne, hinten usw. auf die in den jeweiligen Figuren gewählte beispielhafte Darstellung und Position des Bremsträgers, des Bremsbelags, des Trägerhorns, der Brücke, der Führungskontur und dergleichen. Diese Begriffe sind nicht einschränkend zu verstehen, d.h., durch verschiedene Arbeitsstellungen oder dergleichen können sich diese Bezüge ändern.

In **Fig. 23** ist mit dem Bezugszeichen 1001 ein Bremsträger für eine pneumatisch oder elektromotorisch betätigbare Scheibenbremse eines Fahrzeugs, insbesondere eines Nutzfahrzeugs, insbesondere nach Art einer oder mehrerer der **Fig. 1 bis 22** bezeichnet.

Der Bremsträger 1001 weist einen Anbindungsbereich 1002 auf, der der Festlegung an einer Fahrzeugachse dient, beispielsweise durch Verschrauben mit einem Achsflansch einer Fahrzeugachse des Nutzfahrzeugs (hier nicht dargestellt).

Oberhalb des Anbindungsbereiches 1001 ist ein Belagschacht angeformt, der der Aufnahme und Abstützung wenigstens eines Bremsbelages 100 dient.

Der hier gezeigte Bremsträger 1001 weist dabei zwei solcher Belagschächte auf. Der Bremsträger 1001 ist dabei so ausgebildet, dass er eine Bremsscheibe der Scheibenbremse übergreift und so beidseits der Bremsscheibe jeweils ein Belagschacht zur Aufnahme eines Bremsbelags 1009 angeformt ist.

Jeder der Belagschächte wird dabei durch ein bezogen auf eine bevorzugte Fahrtrichtung "Vorwärts des Fahrzeugs" einlaufseitiges Trägerhorn 1004, 1007, ein auslaufseitiges Trägerhorn 1005, 1008 und eine das einlaufseitige Trägerhorn 1004, 1007 mit dem auslaufseitigen Trägerhorn 1005, 1008 verbindende Brücke 1003, 1006 gebildet.

Die Trägerhörner 1004, 1005 und die Brücke 1003 bezeichnen dabei die Zuspannseite. Entsprechend ist auf der Reaktionsseite des Bremsträgers 1001 ein einlaufseitiges Trägerhorn 1001, ein auslaufseitiges Trägerhorn 1008 und eine Brücke 1006 angeformt.

In der weiteren Beschreibung wird die Ausbildung des Belagschachts auf der Zuspannseite näher beschrieben.

Der Belagschacht der Reaktionsseite kann dabei in gleicher Weise ausgeführt sein. Denkbar ist aber auch, den reaktionsseitigen Belagschacht zumindest geringfügig zu dem zuspannseitigen Belagschacht verschieden auszubilden.

Die an die Trägerhörner 1004, 1005 angrenzenden Bereiche der Brücke 1003 bilden Auflageflächen 1031, 1032, die der radialen Abstützung des Bremsbelags 9 dienen, wobei eine Unterseite 1096 des Bremsbelags im eingeschobenen Zustand auf den Auflageflächen 1031, 1032 aufliegt. Auch die Brücke 1006 der Reaktionsseite des Bremsträgers 1001 weist solche Auflageflächen 1061, 1062 auf.

Auf der der Unterseite 1096 gegenüberliegenden Oberseite des Bremsbelags 1009 ist bevorzugt eine Belaghaltefeder 1010 gehalten. Die Belaghaltefeder 1010 ist dabei vorzugsweise an den äußeren Rändern der Oberseite einer Belagträgerplatte 1091 des Bremsbelags 1009an Haltenasen 1098 fixiert.

Die Trägerhörner 1004, 1005 weisen jeweils eine dem Belagschacht zugewandte Innenseite 1041, 1051 auf, gegen die sich im montierten Zustand des Bremsbelags zumindest Abschnitte von Seitenflächen 1092, 1093 der Belagträgerplatte 1091 des Bremsbelags 1009 wie die in Figur 23 gezeigten Anlageflächen 1097 abstützen.

An einer von der Bremsscheibe abgewandten Seitenfläche 1042, 1052 der Trägerhörner 1004, 1005 sind jeweilige Führungskonturen 1044, 1054 angeordnet, die der Führung des Bremsbelags 1009 in eine Einschiebeposition seitlich des Belagschachts dienen. Als Einschiebeposition wird dabei die Position bezeichnet, in der der Bremsbelag 1009 axial zur (nicht gezeigten) Fahrzeugachse bzw. zur Drehachse der Bremsscheibe in den Belagschacht zwischen die Trägerhörner 1004, 1005 einschiebbar ist.

Diese Führungskonturen 1044, 1054 sind, wie in den Fig. 24 bis 7 gezeigt, bevorzugt als Materialverdickung der Trägerhörner 1004, 1005 an den Seitenflächen 1042, 1052 der Trägerhörner 1004, 1005 angeformt/ausgebildet.

Dadurch ist ermöglicht, dass ein in radialer Richtung in Richtung z der Drehachse der Bremsscheibe entlang einer Seitenfläche 1047, 1057 eines Holmstücks des Trägerhorns 1004, 1005 entlanggeführten Belagträgerplatte 1091, die beim radialen Einführen nicht exakt, sondern seitlich versetzt bewegt wird, bei der radialen Bewegung in Richtung z mit einer Unterkante an die Führungskontur 1044, 1054 anstößt und entlang dieser in seine zentrierte Position geführt wird, bis der Bremsbelag 1009, wie in **Fig. 3** dargestellt, auf einem Montagebereich 1033 aufsetzt.

Der Montagebereich 1033 definiert eine zusätzliche Auflagefläche der jeweiligen Auflageflächen 1031, 1032 der an die Trägerhörner 1004, 1005 angrenzenden Bereiche der Brücke 1003, der dazu geschaffen ist, ein Verschieben des Bremsbelag 1009 an dem Belagschacht vorbei zu weit in Richtung der Drehachse der Bremsscheibe zu verhindern.

Anstelle der Anformung der Führungskonturen 1044, 1054 an die Seitenflächen der Trägerhörner 1004, 1005 ist es prinzipiell auch denkbar, diese Führungskonturen 1044, 1054 als separate, beispielsweise plattenförmige Bauteile am jeweiligen Trägerhorn zu befestigen.

Die zuspannseitigen Seitenflächen 1042, 1052 der Trägerhörner 1004, 1005 weisen des Weiteren Aufnahmebohrungen 1043, 1053 auf, die der Schiebelagerung eines nicht gezeigten Bremssattels dienen.

Wie in den Fig. 1-5 des Weiteren gezeigt ist, sind die Führungskonturen 1044, 1054 der Trägerhörner 1004, 1005 eines Belagschachts zur Brücke 1003 hin aufeinander zu laufend geformt.

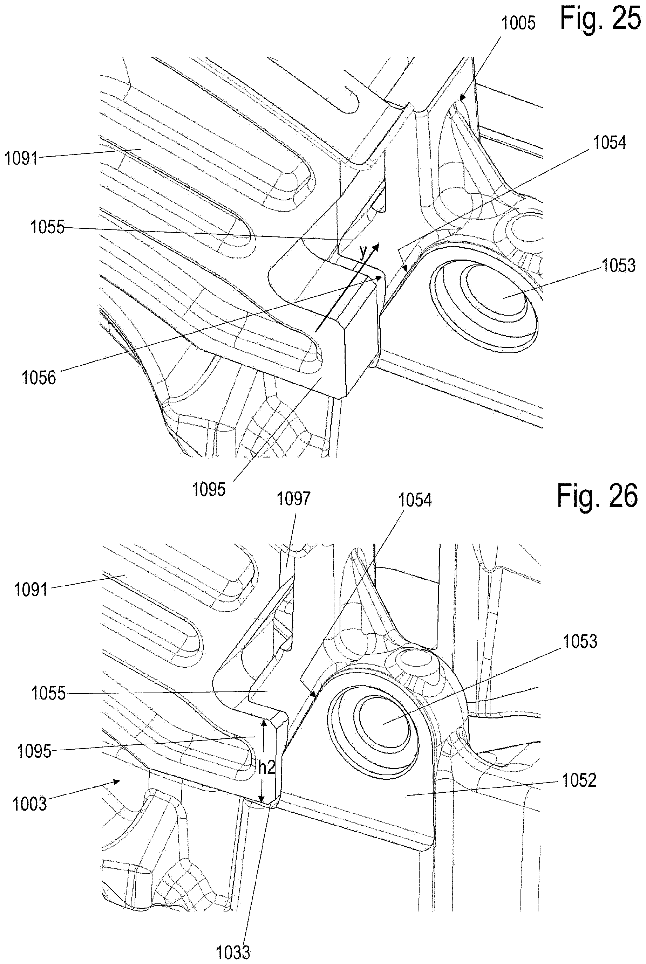

So weisen die Führungskonturen 1044, 1054, wie besonders gut in den Fig. 23- 25 zu erkennen ist, zwei winklig zueinander stehende geradlinige Bereiche auf.

Ein erster geradliniger Bereich ist dabei winklig zur Einschubrichtung z ausgerichtet und dient der Führung des Bremsbelags 1009 in seine zentrale Position zwischen den Trägerhörnern 1004, 1005.

Ein zweiter geradliniger Bereich ist radial, d.h. in Einschubrichtung z ausgerichtet, so dass der Bremsbelag 1009 nach Erreichen des Montagebereichs 1033 axial zur Drehachse der Bremsscheibe in einer Einschubrichtung y zwischen die Trägerhörner 1004, 1005 einschiebbar ist.

Bei der in den Fig. 1-5 gezeigten Variante des Bremsträgers 1 sind an jeweiligen Innenseiten 1041, 1051 der Trägerhörner 1004, 1005 Vorsprünge 1045, 1055 angeformt, die der radialen Sicherung des Bremsbelags 109 mit entsprechend geformter Belagträgerplatte 1091 mit seitlichen Ausnehmungen 1094 dient.

Unterhalb der Vorsprünge 1045, 1055 der Trägerhörner 1004, 1005 ist jeweils eine Aufnahme 1046, 1056 zur Aufnahme eines jeweiligen Vorsprungs 1095 der Belagträgerplatte 1091 angeformt, wobei die Führungskonturen 1044, 1054 jeweils an einem Seitenrand der jeweiligen Aufnahme 1046, 1056 enden. Die Höhe h₂ der Vorsprünge 1095 entspricht dabei vorzugsweise der Höhe h₁ der Aufnahmen 1046, 1056 der Trägerhörner 1004, 1005, so dass der Bremsbelag radial in den Aufnahmen 1046, 1056 fixiert ist.

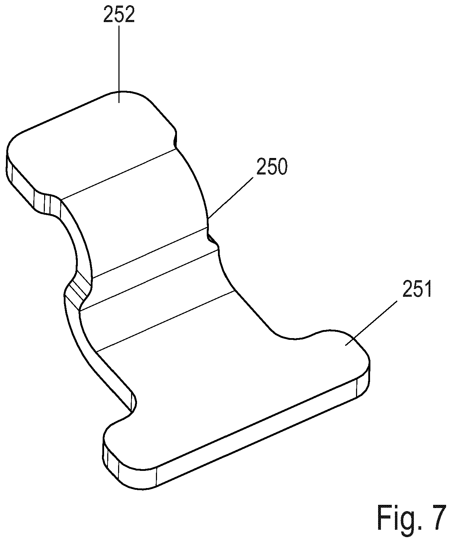

Bei der in den **Fig. 6** **und** **7** gezeigten alternativen Ausführungsvariante eines Bremsträgers 2100 sind die Führungskonturen 2144, 2154 in gleicher Weise wie anhand des zuvor beschriebenen Bremsträgers 2100 ausgeführt.

Wesentlicher Unterschied dieses Bremsträgers 2100 zu dem zuvor beschriebenen Bremsträger sind die geradlinigen - ebenen - Innenflächen 2141, 2151 der Trägerhörner 2140, 2150, so dass bei einem solchermaßen ausgebildeten Bremsträger 2100 neben dem direkten Einführen des Bremsbelags zwischen die Trägerhörner 2140, 2150 auch ein seitlich versetztes Einschieben des Bremsbelags in einfacher Weise möglich ist, da die exakte mittige Ausrichtung des Bremsbelags auch hier durch die Führungskonturen 2144, 2154 und den Montagebereich 2131 an den Auflageflächen 2131, 2132 der Brücke 2130 vereinfacht ist.

Auch der Bremsträger 2100 ist in der hier gezeigten Ausführungsvariante so ausgeführt, dass er eine (nicht dargestellte) Bremsscheibe übergreift, so dass die Trägerhörner 2140, 2150 und die Brücke 2130 einen zuspannseitigen Belagschacht bilden und die Trägerhörner 2170, 2180 und die Brücke 2160 einen reaktionsseitigen Belagschacht ausbilden.

Bevorzugt können nur die zuspannseitigen Trägerhörner 2140, 2150, 2140, 2150 mit solchen Führungskonturen 2144, 2154, 2144, 2154 zur Führung eines Bremsbelags in einer Einschiebeposition seitlich des Belagschachts ausgebildet sein.

Die reaktionsseitigen Trägerhörner 2170, 2180 sind hingegen bevorzugt ohne solche Führungskonturen ausgebildet. Ebenso sind die Auflageflächen 2161, 2162, 2161, 2162 der reaktionsseitigen Brücken 2160, 2160 so ausgebildet, dass deren Breite in Richtung der Drehachse der Bremsscheibe der Breite der Trägerhörner 2170, 2180, 2170, 2180 entspricht.

Die Erfindung wird durch die oben beschriebenen Ausführungsbeispiele nicht eingeschränkt. Sie ist im Rahmen der beigefügten Ansprüche in verschiedener Weise modifizierbar.

### BEZUGSZEICHENLISTE

- Bremssattel: 1
- Zuspannabschnitt: 1a
- Sattelrücken: 1b
- Zugstrebe: 1c
- Öffnung: 1d
- Öffnungen (Bohrungen): 1e
- Laschen: 1f
- Ausnehmung: 1g

- Bremsscheibe: 2
- Bremsscheibendrehachse: 2a
- Bremsträger: 3
- Führungsholme: 4

- Belagschächte: 11, 12
- Abstützflächen: 11a, 11b; 12a, 12b
- Belagschachtgrund: 11c; 12c
- Bremsträgerhörner: 13, 14 sowie 15, 16
- Hinterschnitt: 17, 18

- Bremsbelag: 100
- Belagträger: 110
- Seitenkanten: 111, 112
- Vorsprung: 113, 114
- Haltebügel: 115
- Laschen: 116, 117
- Reibbelag: 120
- Belagfeder: 130
- Schlitz: 131, 132
- Enden: 133, 134

- Bremsbelag: 200
- Belagträger: 210
- Seitenkanten: 211, 212
- Laschen: 213,214
- Durchgangsloch: 215
- Öffnung: 216
- Formschlussmittel: 217

- Reibbelag: 220

- Belagfeder: 230
- Schlitze: 231,232,233

- Haube: 240
- Schenkel: 241,242
- Steg: 243
- Verbindungssteg: 244
- Ring: 245

- Niederhaltebügel: 250
- Ende: 251
- Ende: 252
- Bohrung: 253
- Stift: 254
- Bolzen/Stift: 255
- Feder: 256
- Durchgangsöffnung: 257
- Vorsprung: 258
- Schrauben: 259
- Sicherungselement: 260
- Laschen: 261
- Steg: 262
- Konturen: 2501, 2502

- Kabelbrücke: 271
- Stegabschnitt: 272
- Befestigungsmittel: 273,274
- Gegenbefestigungsmittel: 275, 276
- Laschen: 277
- Lasche: 278

- Bremsträger: 1001
- Anbindungsbereich: 1002
- Brücke: 1003
- Auflagefläche: 1031
- Auflagefläche: 1032
- Montagebereich: 1033

- Trägerhorn: 1004
- Innenseite: 1041
- Seitenfläche: 1042
- Aufnahmebohrung: 1043
- Führungskontur: 1044
- Vorsprung: 1045
- Aufnahme: 1046

- Trägerhorn: 1005
- Innenseite: 1051
- Seitenfläche: 1052
- Aufnahmebohrung: 1053
- Führungskontur: 1054
- Vorsprung: 1055
- Aufnahme: 1056

- Brücke: 1006
- Auflagefläche: 1061
- Auflagefläche: 1062

- Trägerhorn: 1007
- Trägerhorn: 1008

- Belagträgerplatte: 1091
- Seitenfläche: 1092
- Seitenfläche: 1093
- Ausnehmung: 1094
- Vorsprung: 1095
- Unterkante: 1096
- Anlagefläche: 1097
- Haltenase: 1098

- Belaghaltefeder: 1010
- **Bremsträger**: **2100**
- **Anbindungsbereich**: **2100**

- **Brücke**: **2130**
- **Auflagefläche**: **2131**
- **Auflagefläche**: **2132**
- **Montagebereich**: **2133**

- **Trägerhorn**: **2140**
- **Innenseite**: **2141**
- **Seitenfläche**: **2142**
- **Aufnahmebohrung**: **2143**
- **Führungskontur**: **2144**

- **Trägerhorn**: **2150**
- **Innenseite**: **2151**
- **Seitenfläche**: **2152**
- **Aufnahmebohrung**: **2153**
- **Führungskontur**: **2154**

- **Brücke**: **2160**
- **Auflagefläche**: **2161**
- **Auflagefläche**: **2162**

- **Trägerhorn**: **2170**
- **Trägerhorn**: **2180**

- **Höhe des Vorsprungs**: **h₁**
- **Höhe der Ausnehmung**: **h₂**

- **Drehrichtung**: **U**
- **Drehachse**: **D**

## Patentansprüche

1. Scheibenbremse (100) für ein Nutzfahrzeug, mit
a) einem eine Bremsscheibe (2) übergreifenden, vorzugsweise als Schiebesattel ausgebildeten, Bremssattel (1), der an einem ortsfesten Bremsträger (3) angeordnet ist und mit einer Zuspanneinrichtung zum Zuspannen der Bremse,
b) zwei Bremsbelägen (100, 200), die jeweils einen Belagträger (110, 210) und einen darauf befestigten Reibbelag (120, 220) aufweisen, von denen der eine als zuspannseitiger Bremsbelag (100) mittels der Zuspanneinrichtung auf der einen Seite der Bremsscheibe (2) gegen die Bremsscheibe (2) pressbar ist und von der andere als reaktionsseitiger Bremsbelag (200) auf der gegenüberliegenden Seite der Bremsscheibe (2) angeordnet ist, und die jeweils in einen Belagschacht (11, 12) des Bremsträgers (3) eingesetzt sind,
c) wobei der Bremssattel eine zentrale Sattelöffnung (1d) über der Bremsscheibe (2) aufweist, durch welche die zwei Bremsbeläge (100, 200) in den jeweiligen Belagschacht (11, 12) des Bremsträgers (3) einsetzbar sind,
d) der zuspannseitige Bremsbelag (100) mittels eines Formschlusses radial im Bremsträger (3) in seinem Belagschacht (11) gesichert ist,
**dadurch gekennzeichnet, dass**
e) ein Niederhaltebügel (250) vorgesehen ist, der derart ausgebildet ist, dass er lediglich den reaktionsseitigen Bremsbelag (200) in seinem Belagschacht (11, 12) im Bremsträger radial sichert, wobei der Niederhaltebügel (250) mit seinem von dem reaktionsseitigen Bremsbelag (200) abgewandten Ende an dem Bremssattel (1) gehalten ist.

2. Scheibenbremse nach Anspruch 1, **dadurch gekennzeichnet, dass** der zuspannseitige Bremsbelag (100) eine Belagfeder (130) aufweist, die am zuspannseitigen Bremsbelag (100) gesichert ist und die Enden (133, 134) aufweist, die auf Bremsträgerhörnern (13, 14) des Bremsträgers (3) federnd aufliegen.

3. Scheibenbremse nach Anspruch 1 oder 2, **dadurch gekennzeichnet, dass** der Niederhaltebügel (250) in den reaktionsseitigen Bremsbelag (200) eingreift.

4. Scheibenbremse nach Anspruch 1, 2 oder 3, **dadurch gekennzeichnet, dass** der Niederhaltebügel (250) den einen reaktionsseitigen Bremsbelag (200) ganz oder teilweise axial parallel zur Bremsscheibe (2) übergreift.

5. Scheibenbremse nach Anspruch 1, 2, 3 oder 4, **dadurch gekennzeichnet, dass** der Niederhaltebügel (250) mit seinem von dem radial zu sichernden reaktionsseitigen Bremsbelag (200) abgewandten Ende lösbar an dem Bremssattel (1) gehalten ist.

6. Scheibenbremse nach einem der vorstehenden Ansprüche, **dadurch gekennzeichnet, dass** der Niederhaltebügel (250) an dem radial zu sichernden reaktionsseitigen Bremsbelag (200) festgelegt ist, insbesondere an einem Teil des reaktionsseitigen Bremsbelags (200) unlösbar festgelegt ist.

7. Scheibenbremse nach einem der vorstehenden Ansprüche, **dadurch gekennzeichnet, dass** der Belagschacht radial zu sichernden reaktionsseitigen Bremsbelages (200) in dem Bremsträger (3) oder in dem Bremssattel (1) ausgebildet ist und dass der Belagschacht des zuspannseitigen Bremsbelages (100) in dem Bremsträger (3) ausgebildet ist.

8. Scheibenbremse nach Anspruch 6 oder 7, **dadurch gekennzeichnet, dass** der Niederhaltebügel (250) an einer Haube (240) und/oder einer Belagfeder (230) des niederzuhaltenden Bremsbelags (200) festgelegt ist.

9. Scheibenbremse nach einem der vorstehenden Ansprüche, **dadurch gekennzeichnet, dass** die Belagfeder (230) die Haube (240) ganz oder teilweise durchsetzt.

10. Scheibenbremse nach einem der vorstehenden Ansprüche, **dadurch gekennzeichnet, dass** die Belagfeder (230) mit der Haube (240) einstückig ausgebildet ist oder dass sie mit der Haube (240) stoffschlüssig verbunden ist.

11. Scheibenbremse nach einem der vorstehenden Ansprüche, **dadurch gekennzeichnet, dass** der Niederhaltebügel (250) mit der Haube (240) formschlüssig verbunden ist.

12. Scheibenbremse nach einem der vorstehenden Ansprüche, **dadurch gekennzeichnet, dass** der Niederhaltebügel (250) an dem Bremssattel (1) lösbar oder unlösbar befestigt ist oder einstückig mit diesem ausgebildet ist.

13. Scheibenbremse nach einem der vorstehenden Ansprüche, **dadurch gekennzeichnet, dass** der zuspannseitige Bremsbelag (100) mittels Vorsprüngen (17, 18) an dem Belagträger (210) radial im Bremsträger (3) gesichert ist, die in korrespondierende Hinterschnitte (17, 18) des Bremsträgers eingreifen.

14. Scheibenbremse nach einem der vorstehenden Ansprüche, **dadurch gekennzeichnet, dass** der Bremsträger (1001) folgendes aufweist:
- einen Anbindungsbereich (1002, 2120) zur Festlegung an einer Fahrzeugachse ,
- wenigstens einen Belagschacht zur Aufnahme und Abstützung wenigstens des zuspannseitigen Bremsbelags (100),
- wobei der Belagschacht durch ein einlaufseitiges Trägerhorn (1004,2140), ein auslaufseitiges Trägerhorn (1005, 2150) und eine das einlaufseitige Trägerhorn (1004, 10140) und das auslaufseitige Trägerhorn (1005, 2150) verbindende Brücke (1003, 2130) gebildet wird,
- wobei an die Trägerhörner angrenzende Bereiche der Brücke Auflageflächen (1031, 1032, 2131, 2132) zur radialen Abstützung des wenigstens einen zuspannseitigen Bremsbelags (100) bilden,
- wobei an einer Seitenfläche (1042, 1052, 10142, 2152) der Trägerhörner jeweilige Führungskonturen (1044,1054, 2144, 2154) zur Führung des Bremsbelags (100) in eine Einschiebeposition seitlich des Belagschachts angeordnet sind, in der der Bremsbelag (100) axial zur Fahrzeugsachse in den Belagschacht zwischen die Trägerhörner einschiebbar ist.

15. Scheibenbremse nach Anspruch 14, **dadurch gekennzeichnet, dass** die Auflageflächen zur radialen Abstützung des wenigstens einen Bremsbelags (100) seitlich um einen Montagebereich zur Begrenzung der Schiebebewegung des Bremsbelags in die Einschiebeposition seitlich des Belagschachts vergrößert sind.

16. Scheibenbremse nach einem der vorstehenden Ansprüche, **dadurch gekennzeichnet, dass** Führungskonturen (10044, 10054, 2144, 2154) als Materialverdickung der Trägerhörner (1004, 1005, 2140, 2150) an den Seitenflächen (42, 52, 142, 152) der Trägerhörner angeformt sind.

17. Scheibenbremse nach Anspruch 16, **dadurch gekennzeichnet, dass** die Führungskonturen der Trägerhörner (1004, 1005, 2140, 2150) eines Belagschachts zur Brücke (1003, 2130) hin aufeinander zulaufend geformt sind.

18. Scheibenbremse nach einem der vorstehenden Ansprüche 16 oder 17, **dadurch gekennzeichnet, dass** die Führungskonturen jeweils wenigstens einen geradlinigen Führungsbereich aufweisen.

19. Scheibenbremse nach Anspruch 18, **dadurch gekennzeichnet, dass** ein erster geradliniger Führungsbereich winklig zur Ebene der Innenseite (1041, 1051) der Trägerhörner (1004, 1005) ausgerichtet ist und ein zweiter geradliniger Führungsbereich in der Ebene der Innenseite (1041, 1051) des jeweiligen Trägerhorns (1004, 1005) liegt.

20. Scheibenbremse nach einem der vorstehenden Ansprüche 18 oder 19, **dadurch gekennzeichnet, dass** an jeweiligen Innenseiten (1041, 1051) der Trägerhörner (1004, 1005) Vorsprünge (1045, 1055) angeformt sind, zur radialen Sicherung des Bremsbelags (100,1009) mit entsprechend geformter Belagträgerplatte (1091) mit seitlichen Ausnehmungen (1094).

21. Scheibenbremse nach Anspruch 20, **dadurch gekennzeichnet, dass** unterhalb der Vorsprünge (1045, 1055) jeweils eine Aufnahme (1046, 1056) zur Aufnahme eines jeweiligen Vorsprungs (1095) der Belagträgerplatte (1091) angeformt ist, wobei die Führungskonturen (1044, 1054) jeweils an einem Seitenrand der jeweiligen Aufnahme (1046, 1056) enden.

22. Bremsbelagsatz für eine Scheibenbremse nach einem der vorstehenen Ansprüche, mit einem reaktionsseitigen Bremsbelag und mit einem zuspannseitigen Bremsbelag (100), wobei der zuspannseitige Bremsbelag (100) mittels wenigstens eines Formschlusselementes am Belagträger (110) radial im Bremsträger gesichert werden kann und eine Belagfeder (130) aufweist, die am zuspannseitigen Bremsbelag (100) gesichert ist und wobei die Belagfeder (130) Enden (133, 134) aufweist, die dazu ausgelegt sind, auf Bremsträgerhörnern (13, 14) eines zugeordneten Bremsträgers (3) federnd aufzuliegen und dass der reaktionsseitige Bremsbelag (200) zum Zusammenwirken mit einem Niederhaltebügel (250) ausgebildet ist, welcher Niederhaltebügel (250) derart ausgebildet ist, dass er lediglich den reaktionsseitigen Bremsbelag (200) in seinem Belagschacht (12) an einer Scheibenbremse radial sichert.

23. Bremsbelagsatz nach Anspruch 22, **dadurch gekennzeichnet, dass** der zuspannseitige Bremsbelag (100) mittels Vorsprüngen (113, 114) an dem Belagträger (210) radial im Bremsträger (200) gesichert ist.

24. Bremsbelagsatz nach einem der Ansprüche 22 bis 23, **dadurch gekennzeichnet, dass** er als Baueinheit mit einem Niederhaltebügel (250) ausgebildet ist, welcher Niederhaltebügel (250) derart ausgebildet ist, dass er lediglich den reaktionsseitigen Bremsbelag (200) in seinem Belagschacht (12) an einer Scheibenbremse radial sichert.

25. Bremsbelagsatz nach einem der Ansprüche 22 bis 24, **dadurch gekennzeichnet, dass** der Niederhaltebügel (250) an dem reaktionsseitigen Bremsbelag (200) festgelegt ist oder diesen übergreift oder in diesen eingreift.

26. Verfahren zum Montieren der Bremsbeläge in einer Scheibenbremse nach einem der darauf bezogenen vorstehenden Ansprüche, **dadurch gekennzeichnet, dass**
a) der reaktionsseitige Bremsbelag (200) durch die Sattelöffnung (1d) des Bremssattels (1) in seinen Belagschacht (11,12) im Bremsträger (3) radial eingesetzt wird, wobei er dann dort mit einem Niederhaltebügel, der am Bremssattel (1) angeordnet wird, radial gesichert wird,
b) der zuspannseitige Bremsbelag (100) durch die Sattelöffnung (1d) des Bremssattels (1) zunächst radial in die Scheibenbremse eingeführt wird und dann durch eine axiale Bewegung in eine Position in dem ihm zugeordneten Belagschacht (11, 12) des Bremsträgers (3) bewegt wird, in welcher er dort radial durch Formschluß zwischen dem zuspannseitigen Bremsbelag (100) und dem Bremsträger (3) gesichert ist,
c) wobei ferner die Enden einer Belagfeder (130), die am zuspannseitigen Bremsbelag (100) gesichert ist, auf Bremsträgerhörner (13, 14) des Bremsträgers (3) aufgelegt werden, so dass sie auf diesen Bremsträgerhörnern (13, 14) des Bremsträgers (3) federnd aufliegen.

## Claims

1. Disc brake for a commercial vehicle, having
a) a brake calliper (1) which engages over a brake disc (2) and which is preferably designed as a sliding calliper and which is arranged on a stationary adapter (3), and having an application device for applying the brake,
b) two brake pads (100, 200) which each have a backing plate (110, 210) and a friction pad (120, 220) fastened to said backing plate and of which one, as an application-side brake pad (100), can be pressed by means of the application device against the brake disc (2) on one side of the brake disc (2) and of which the other, as a reaction-side brake pad (200), is arranged on the opposite side of the brake disc (2), and which are each inserted into a pad slot (11, 12) of the adapter (3),
c) wherein the brake calliper has a central calliper opening (1d) over the brake disc (2), through which calliper opening the two brake pads (100, 200) can be inserted into the respective pad slot (11, 12) of the adapter (3),
d) wherein the application-side brake pad (100) is secured radially in the adapter (3) in its pad slot (11) by means of positive locking,
**characterised in that**
e) a hold-down clip (250) is provided which is designed so as to radially secure only the reaction-side brake pad (100, 200) in its pad slot (11, 12) in the adapter, wherein the hold-down clip (250) is, with its end averted from the brake pad (200), held on the brake calliper (1).

2. Disc brake according to claim 1, **characterised in that** the application-side brake pad (100) has a pad spring (130) which is secured on the application-side brake pad (100) and which has ends (133, 134) which lie resiliently on adapter horns (13, 14) of the adapter (3).

3. Disc brake according to claim 1 or 2, **characterised in that** the hold-down clip (250) engages with the reaction-side brake pad (200).

4. Disc brake according to claim 1, 2 or 3, **characterised in that** the hold-down clip (250) engages over the one brake pad (200) entirely or partially axially parallel with respect to the brake disc (2).

5. Disc brake according to claim 1, 2, 3 or 4, **characterised in that** the hold-down clip (250) is, with its end averted from the reaction-side brake pad (200) to be secured radially, held releasably on the brake calliper (1).

6. Disc brake according to any of the preceding claims, **characterised in that** the hold-down clip (250) is fixed to the reaction-side brake pad (200) to be secured radially, in particular is non-releasably fixed to a part of the reaction-side brake pad (200).

7. Disc brake according to any of the preceding claims, **characterised in that** the pad slot of the reaction-side brake pad to be secured is formed in the adapter (3) or in the brake calliper (1), and **in that** the pad slot of the application-side brake pad (100) is formed in the adapter (3).

8. Disc brake according to claim 6 or 7, **characterised in that** the hold-down clip (250) is fixed to a cover (240) and/or to a pad spring (230) of the brake pad (200) to be held down.

9. Disc brake according to any of the preceding claims, **characterised in that** the pad spring (230) entirely or partially extends through the cover (240).

10. Disc brake according to any of the preceding claims, **characterised in that** the pad spring (230) is formed in one piece with the cover (240), or **in that** said pad spring is cohesively bonded to the cover (240).

11. Disc brake according to any of the preceding claims, **characterised in that** the hold-down clip (250) is positively connected to the cover (240).

12. Disc brake according to any of the preceding claims, **characterised in that** the hold-down clip (250) is releasably or non-releasably fastened to the brake calliper (1) or is formed in one piece therewith.

13. Disc brake according to any of the preceding claims, **characterised in that** the application-side brake pad (100) is secured radially in the adapter (3) by means of projections (17, 18) on the adapter (210), which projections engage with corresponding undercuts (17, 18) of the brake adapter.

14. Disc brake according to any of the preceding claims, **characterised in that** the adapter (1001) has the following:
- an attachment region (1002, 2120) for fixing to a vehicle axle,
- at least one pad slot for receiving and supporting at least the application-side brake pad (100),
- wherein the pad slot is formed by an entry-side adapter horn (1004, 2140), an exit-side adapter horn (1005, 2150) and a bridge (1003, 2130) which connects the entry-side adapter horn (1004, 10140) and the exit-side adapter horn (1005, 2150),
- wherein regions of the bridge adjoining the adapter horns form bearing surfaces (1031, 1032, 2131, 2132) for radially supporting the at least one application-side brake pad (100),
- wherein, on a side surface (1042, 1052, 10142, 2152) of the adapter horns, there are arranged respective guide contours (1044, 1054, 2144, 2154) for guiding the brake pad (100) into a sliding-in position to the side of the pad slot, in which position the brake pad (100) can be slid, axially with respect to the vehicle axle, into the pad slot between the adapter horns.

15. Disc brake according to claim 14, **characterised in that** the bearing surfaces for radially supporting the at least one brake pad (100) are laterally enlarged by a mounting region for limiting the sliding movement of the brake pad into the sliding-in position to the side of the pad slot.

16. Disc brake according to any of the preceding claims, **characterised in that** guide contours (10044, 10054, 2144, 2154) are integrally formed, as material thickening of the adapter horns (1004, 1005, 2140, 2150), on the side surfaces (42, 52, 142, 152) of the adapter horns.

17. Disc brake according to claim 16, **characterised in that** the guide contours of the adapter horns (1004, 1005, 2140, 2150) of a pad slot are shaped so as to converge on one another toward the bridge (1003, 2130).

18. Disc brake according to claim 16 or 17, **characterised in that** the guide contours each have at least one rectilinear guide region.

19. Disc brake according to claim 18, **characterised in that** a first rectilinear guide region is oriented at an angle with respect to the plane of the inner side (1041, 1051) of the adapter horns (1004, 1005) and a second rectilinear guide region lies in the plane of the inner side (1041, 1051) of the respective adapter horn (1004, 1005).

20. Disc brake according to claim 18 or 19, **characterised in that** on respective inner sides (1041, 1051) of the adapter horns (1004, 1005), there are integrally formed projections (1045, 1055) for radially securing the brake pad (100, 1009) with correspondingly shaped backing plate (1091) with lateral recesses (1094).

21. Disc brake according to claim 20, **characterised in that,** below the projections (1045, 1055), there is integrally formed in each case one receptacle (1046, 1056) for receiving a respective projection (1095) of the backing plate (1091), wherein the guide contours (1044, 1054) end in each case at a side edge of the respective receptacle (1046, 1056).

22. Brake pad set for a disc brake according to any of the preceding claims, having a reaction-side brake pad and an application-side brake pad (100), wherein the application-side brake pad (100) is secured radially in the adapter by means of at least one positive-locking element on the backing plate (110) and has a pad spring (130) which is secured on the application-side brake pad (100), and wherein the pad spring (130) has ends (133, 134) which are designed to lie resiliently on adapter horns (13, 14) of an associated adapter (3), and in that the reaction-side brake pad (200) is designed for interacting with a hold-down clip (250), which hold-down clip (250) is designed such that it radially secures only the reaction-side brake pad (200) in its pad slot (12) on a disc brake. ,

23. Pad set according to claim 22, **characterised in that** the application-side brake pad (100) is secured radially in the adapter (200) by means of projections (113, 114) on the backing plate (210).

24. Pad set according to claim 22 or 23, **characterised in that** it is designed as a structural unit with a hold-down clip (250), which hold-down clip (250) is designed such that it radially secures only the reaction-side brake pad (200) in its pad slot (12) on a disc brake.

25. Pad set according to any of claims 22 to 24, **characterised in that** the hold-down clip (250) is fixed to the reaction-side brake pad (200) or engages over or engages with said reaction-side brake pad.

26. Method for mounting the brake pads in a disc brake according to any of the claims relating thereto, **characterised in that**
a) the reaction-side brake pad (200) is inserted radially through the calliper opening (1d) of the brake calliper (1) into its pad slot (11, 12) in the adapter (3), wherein said reaction-side brake pad is then radially secured there by means of a hold-down clip which is arranged on the brake calliper (1),
b) the application-side brake pad (100) is initially inserted radially into the disc brake through the calliper opening (1d) of the brake calliper (1) and is then, by means of an axial movement, moved into a position in the pad slot (11, 12), assigned thereto, of the adapter (3) in which said application-side brake pad is secured there radially by means of positive locking between the application-side brake pad (100) and the adapter (3),
c) wherein furthermore, the ends of a pad spring (130), which is secured on the application-side brake pad (100), are placed onto adapter horns (13, 14) of the adapter (3) so as to lie resiliently on said adapter horns (13, 14) of the adapter (3).

## Revendications

1. Frein (100) à disque d'un véhicule utilitaire, comprenant
a) un étrier (1) de frein constitué de préférence sous la forme d'un étrier coulissant, qui chevauche un disque (2) de frein et qui est monté sur un flasque (3) de frein fixe en position et comprenant un dispositif de serrage pour le serrage du frein,
b) deux garnitures (100, 200) de frein, qui ont chacune un support (110, 210) de garniture et une garniture (120, 220) de friction, qui y est fixée, dont l'une peut, comme garniture (100) de frein du côté du serrage, être poussée au moyen du dispositif de serrage sur une face du disque (2) de frein sur le disque (2) de frein et dont l'autre est, comme garniture (200) de frein du côté de la réaction, disposée sur la face opposée du disque (2) de frein et qui sont insérées chacune dans un puits (11, 12) de garniture du flasque (3) de frein,
c) dans lequel l'étrier de frein a une ouverture (1d) centrale d'étrier au-dessus du disque (2) de frein, par laquelle les deux garnitures (100, 200) de frein peuvent être insérées dans le puits (11, 12) de garniture respectif du flasque (3) de frein,
d) la garniture (100) de frein du côté du serrage est fixée au moyen d'une complémentarité de forme radialement dans le flasque (3) de frein dans son puits (11) de garniture,
**caractérisé en ce que**
e) il est prévu un arceau (250) de maintien vers le bas, qui est constitué de manière à fixer radialement seulement la garniture (200) de frein du côté de la réaction dans son puits (11, 12) de garniture du flasque de frein, dans lequel l'arceau (250) de maintien vers le bas est maintenu sur l'étrier (1) de frein par son extrémité, non tournée vers la garniture (200) de frein du côté de la réaction.

2. Frein à disque suivant la revendication 1, **caractérisé en ce que** la garniture (100) de frein du côté du serrage a un ressort (130) de garniture, qui est fixé à la garniture (100) de frein du côté du serrage et qui a des extrémités (133, 134), qui s'appliquent élastiquement à des cornes (13, 14) du flasque (3) de frein.

3. Frein à disque suivant la revendication 1 ou 2, **caractérisé en ce que** l'arceau (250) de maintien vers le bas pénètre dans la garniture (200) de frein du côté de la réaction.

4. Frein à disque suivant la revendication 1, 2 ou 3, **caractérisé en ce que** l'arceau (250) de maintien vers le bas chevauche en tout ou partie, axialement, parallèlement au disque (2) de frein, la garniture (200) de frein du côté de la réaction.

5. Frein à disque suivant la revendication 1, 2, 3 ou 4, **caractérisé en ce que** l'arceau (250) de maintien vers le bas est maintenu, de manière amovible sur l'étrier (1) de frein par son extrémité, non tournée vers la garniture (200) de frein du côté de la réaction à fixer radialement.

6. Frein à disque suivant l'une des revendications précédentes, **caractérisé en ce que** l'arceau (250) de maintien vers le bas est fixé à la garniture (200) de frein du côté de la réaction à fixer radialement, notamment est fixé de manière inamovible à une partie de la garniture (200) de frein du côté de la réaction.

7. Frein à disque suivant l'une des revendications précédentes, **caractérisé en ce que** le puits de garniture de la garniture (200) de frein du côté de la réaction à fixer radialement est constitué dans le flasque (3) de frein ou dans l'étrier (1) de frein, et **en ce que** le puits de garniture de la garniture (100) du côté du serrage est constitué dans le flasque (3) du frein.

8. Frein à disque suivant la revendication 6 ou 7, **caractérisé en ce que** l'arceau (250) de maintien vers le bas est fixé à une calotte (240) et/ou à un ressort (230) de garniture de la garniture (200) de frein à maintenir vers le bas.

9. Frein à disque suivant l'une des revendications précédentes, **caractérisé en ce que** le ressort (230) de garniture traverse en tout ou partie la calotte (240).

10. Frein à disque suivant l'une des revendications précédentes, **caractérisé en ce que** le ressort (230) de garniture est constitué d'une seule pièce avec la calotte (240) ou **en ce qu'**il est relié à coopération de matière à la calotte (240).

11. Frein à disque suivant l'une des revendications précédentes, **caractérisé en ce que** l'arceau (250) de maintien vers le bas est relié à complémentarité de forme à la calotte (240).

12. Frein à disque suivant l'une des revendications précédentes, **caractérisé en ce que** l'arceau (250) de maintien vers le bas est fixé de manière amovible ou inamovible à l'étrier (1) de frein ou est constitué d'une pièce avec celui-ci.

13. Frein à disque suivant l'une des revendications précédentes, **caractérisé en ce que** la garniture (100) de frein du côté du serrage est fixée radialement dans lè flasque (3) de frein au moyen de saillies (17, 18) sur le support (210) de garniture, qui pénètrent dans des contredépouilles (17, 18) correspondantes du flasque de frein.

14. Frein à disque suivant l'une des revendications précédentes, **caractérisé en ce que** le flasque (1001) de frein a ce qui suit :
- une partie (1002, 2120) de liaison pour la fixation à un essieu de véhicule,
- au moins un puits de garniture pour la réception et l'appui d'au moins la garniture (100) de frein du côté du serrage,
- dans lequel on forme le puits de garniture par une corne (1004, 2140) de flasque du côté de l'entrée, une corne (1005, 2150) de flasque du côté de la sortie et un pontet (1003, 2130) reliant la corne (1004, 10140) de flasque du côté de l'entrée et la corne (1005, 2150) du flasque du côté de la sortie,
- dans lequel, sur les parties du pontet voisines des cornes du flasque, sont formées des surfaces (1031, 1032, 2131, 2132) d'appui radiales d'au moins une garniture (100) de frein du côté du serrage,
- dans lequel, sur une surface (1042, 1052, 10142, 2152) latérale des cornes de flasque, sont disposés, latéralement au puits de garniture, respectivement des contours (1044, 1054, 2144, 2154) de guidage pour le guidage de la garniture (100) de frein dans une position d'insertion, dans laquelle la garniture (100) de frein peut être insérée axialement à l'essieu de véhicule dans le puits de garniture entre les cornes du flasque.

15. Frein à disque suivant la revendication 14, **caractérisé en ce que** les surfaces d'appui radiales d'au moins une garniture (100) de frein sont, latéralement au puits de garniture, agrandies latéralement d'une partie de montage pour la limitation du mouvement d'insertion de la garniture de frein dans la position d'insertion.

16. Frein à disque suivant l'une des revendications précédentes, **caractérisé en ce que** les contours (10044, 10054, 2144, 2154) de guidage viennent de matière comme épaississements de matériau des cornes (1004, 1005, 2140, 2150) du flasque sur les surfaces (42, 52, 142, 152) latérales des cornes du flasque.

17. Frein à disque suivant la revendication 16, **caractérisé en ce que** les contours de guidage des cornes (1004, 1005, 2140, 2150) du flasque d'un puits de garniture pointent l'un vers l'autre vers le pontet (1003, 2130).

18. Frein à disque suivant l'une des revendications 16 ou 17 précédentes, **caractérisé en ce que** les contours de guidage ont respectivement au moins une partie de guidage rectiligne.

19. Frein à disque suivant la revendication 18, **caractérisé en ce qu'une** première partie de guidage rectiligne est dirigée en faisant un angle avec le plan de la face (1041, 1051) intérieure des cornes (1004, 1005) du flasque et une deuxième partie de guidage rectiligne est dans le plan de la face (1041, 1051) intérieure de la corne (1004, 1005) du flasque correspondante.

20. Frein à disque suivant l'une des revendications 18 ou 19 précédentes, **caractérisé en ce que,** sur les faces (1041, 1051) intérieures respectives des cornes (1004, 1005) de flasque viennent de matière des saillies (1045, 1055) pour la fixation radiale de la garniture (100, 1009) de frein par une plaque (1091) de support de garniture formée de manière correspondante et ayant des évidements (1094) latéraux.

21. Frein à disque suivant la revendication 20, **caractérisé en ce qu'**en-dessous des saillies (1045, 1055) est formé respectivement un logement (1046, 1056) pour la réception d'une saillie (1095) respective de la plaque (1091) de support de garniture, dans lequel les contours (1044, 1054) de guidage se terminent respectivement à un bord latéral du logement (1046, 1056) respectif.

22. Jeu de garnitures de frein d'un frein à disque suivant l'une des revendications précédentes, comprenant une garniture de frein du côté de la réaction et une garniture (100) de frein du côté du serrage, dans lequel la garniture (100) de frein du côté du serrage peut être fixée au moyen d'au moins un élément à complémentarité de forme du support (110) de garniture radialement dans le flasque de frein et a un ressort (130) de garniture, qui est fixé à la garniture (100) de frein du côté du serrage, et dans lequel le ressort (130) de garniture a des extrémités (133, 134), qui sont conçues pour s'appliquer élastiquement à des cornes (13, 14) de flasque de frein d'un flasque (3) de frein associé, et en ce que la garniture (200) de frein du côté de la réaction est constituée pour coopérer avec un arceau (250) de maintien vers le bas, lequel arceau (250) de maintien vers le bas est constitué de manière à fixer radialement sur le frein à disque seulement la garniture (200) de frein du côté de la réaction dans son puits (12) de garniture.

23. Jeu de garnitures de frein suivant la revendication 22, **caractérisé en ce que** la garniture (100) de frein du côté du serrage est fixée radialement dans le flasque (200) de frein au moyen de saillies (113, 114) du support (210) de garniture.

24. Jeu de garnitures de frein suivant l'une des revendications 22 à 23, **caractérisé en ce qu'il** est constitué, sous la forme d'une unité de construction avec un arceau (250) de maintien le bas, lequel arceau (250) de maintien vers le bas est constitué de manière à fixer radialement à un frein à disque seulement la garniture (200) de frein du côté de la réaction dans son puits (12) de garniture.

25. Jeu de garnitures de frein suivant l'une des revendications 22 à 24, **caractérisé en ce que** l'arceau (250) de maintien vers le bas est fixé à la garniture (200) de frein du côté de la réaction ou la chevauche ou y pénètre.

26. Procédé de montage des garnitures de frein dans un frein à disque suivant l'une des revendications précédentes s'y rapportant, **caractérisé en ce que**
a) on insère radialement, dans son puits (11, 12) de garniture du flasque (3) de frein, la garniture (200) de frein du côté de la réaction par l'ouverture (1d) de l'étrier (1) de frein, dans lequel elle y est alors fixée radialement par un arceau de maintien vers le bas que l'on monte sur l'étrier (1) de frein,
b) on insère, d'abord radialement dans le frein à disque, la garniture (100) de frein du côté du serrage par l'ouverture (1d) de l'étrier (1) de frein et on la met ensuite, par un déplacement axial, dans une position dans le puits (11, 12) de garniture, qui lui est associé du flasque (3) de frein, dans laquelle elle y est fixée radialement par complémentarité de forme entre la garniture (100) de frein du côté du serrage et le flasque (3) de frein,
c) dans lequel on met en outre les extrémités d'un ressort (130) de garniture, qui est fixé à la garniture (100) de frein du côté du serrage, sur des cornes (13, 14) du flasque (3) de frein, de manière à ce qu'elles s'appliquent élastiquement à ses cornes (13, 14) du flasque (3) de frein.
